(19) Europäisches Patentamt
European Patent Office
Office européen des brevets

(11) EP 0 819 730 B1

(12) **EUROPÄISCHE PATENTSCHRIFT**

(45) Veröffentlichungstag und Bekanntmachung des Hinweises auf die Patenterteilung:
**06.04.2005 Patentblatt 2005/14**

(51) Int Cl.$^7$: **C08K 5/3435**

(21) Anmeldenummer: **97810452.9**

(22) Anmeldetag: **08.07.1997**

(54) **Ozonresistente Langzeitstabilisatoren**

Ozone resistant long-time stabilisers

Stabilisateur de longue durée, résistantes à l'ozone

(84) Benannte Vertragsstaaten:
**BE DE ES FR GB IT NL**

(30) Priorität: **17.07.1996 CH 178796**
**14.05.1997 CH 113497**

(43) Veröffentlichungstag der Anmeldung:
**21.01.1998 Patentblatt 1998/04**

(73) Patentinhaber: **Ciba Specialty Chemicals Holding Inc.**
**4057 Basel (CH)**

(72) Erfinder: **Gugumus, François**
**4123 Allschwill (CH)**

(56) Entgegenhaltungen:
**EP-A- 0 501 239**
**DE-A- 19 613 982**
**US-A- 4 794 134**

- **AddCon'95 Conference, 5-6 April 1995,F. Gugumus, Optimised stabiliser systems for polyolefins XP002204042**
- **J. POSPISIL: "Aromatic and heterocyclic amines in polymer stabilisation" ADVANCES IN POLYMER SCIENCE, 1995, Seite 87-189 XP001085209**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Stabilisierung von organischen Polymeren gegen Ozon in der umgebenden Luft, entsprechende Zusammensetzungen sowie die Verwendung bestimmter sterisch gehinderter Amine als Ozonstabilisatoren.

Es ist bekannt, daß die Einwirkung von Ozon auf Gummi zu Rißbildung führen kann (R.P. Lattimer et al. in G. Scott (Ed.) Atmospheric Oxidation and Antioxidants, Vol. 2, Chapter 7, 363, Elsevier, Amsterdam).

Eine Verbesserung der Stabilität von organischen Polymeren gegen die schädigenden Einflüsse von Licht, Luftsauerstoff und Wärme wird üblicherweise dadurch erreicht, daß man den Polymeren Antioxidantien und/oder Lichtschutzmittel beigibt, beispielsweise solche aus der Klasse der sterisch gehinderten Amine.

Als Problem erweist sich jedoch häufig, daß die Effizienz der Stabilisierung enormen Schwankungen ausgesetzt ist und die Wirkung der Stabilisierung und damit die Gebrauchsdauer des stabilisierten Polymeren nur ungenügend vorherbestimmt werden kann.

Es wurde nun gefunden, daß die Anwesenheit von Ozon in der Umgebungsluft eine schädigende Wirkung auf ungesättigte wie auch auf gesättigte organische Polymere ausüben kann.

Überraschend hat sich dabei gezeigt, daß durch Einsatz bestimmter, weiter unten beschriebener, sterisch gehinderter Amine eine deutliche Verbesserung der Stabilisierung bei Anwesenheit von Ozon erzielt werden kann. Die Stabilität der so erhaltenen Polymere weist unerwartet keine Abhängigkeit von der Ozonkonzentration auf, so daß eine deutlich exaktere Voraussage der Lebensdauer der daraus hergestellten Artikel möglich wird. Gegenstand der Erfindung ist daher ein Verfahren zur Stabilisierung eines organischen Polymeren gegen Ozon in der Umgebungsluft, dadurch gekennzeichnet, daß man dem Polymeren als Stabilisator eine monomere sterisch gehinderte Piperidinverbindung oder eine oligomere oder polymere sterisch gehinderte Piperidinverbindung, welche eine oder mehrere Triazineinheiten enthält, oder ein sekundäres sterisch gehindertes Amin beigibt.

Unter monomeren sterisch gehinderten Piperidinverbindungen sind hier solche Verbindungen zu verstehen, deren mittleres Molekulargewicht im Bereich 140 bis 1000 g/Mol, insbesondere 150-800 g/Mol liegt und welche mindestens einen Rest der Formel I

(I) 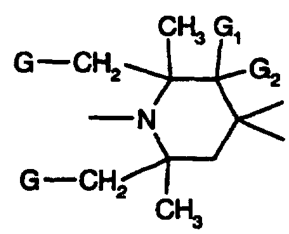

enthalten, worin

G Wasserstoff oder Methyl ist, und

$G_1$ und $G_2$ Wasserstoff, Methyl oder gemeinsam Sauerstoff bedeuten.

Das Molekulargewicht einer oligomeren oder polymeren sterisch gehinderten Piperidinverbindung, welche eine oder mehrere Triazineinheiten enthält, liegt in der Regel über 1000 g/Mol, insbesondere über 1200 g/Mol; diese Verbindungen enthalten mindestens 3, meist mehrere Gruppen der Formel I sowie zusätzlich mindestens einen Triazinring der Formel

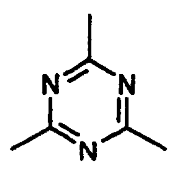 .

Von besonderem Interesse sind unter den wirksamen sterisch gehinderten Piperidinverbindungen die sekundären sterisch gehinderten Amine. Darunter sind solche Verbindungen zu verstehen, welche mindestens eine 2,2,6,6-Tetramethylpiperidineinheit der Formel I'

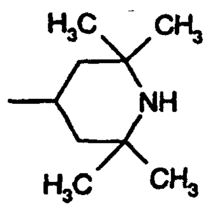

(I')

enthalten.

Die Erfindung beinhaltet die Verwendung der genannten sterisch gehinderten Piperidinverbindungen, insbesondere sekundärer sterisch gehinderter Amine, als Ozonstabilisatoren für organische Polymere, sowie ein entsprechend stabilisiertes organisches Polymer im Kontakt mit ozonhaltiger Luft.

Gemäß vorliegender Erfindung lassen sich organische Polymere effektiv gegen die schädigenden Einwirkungen von Ozon in der Umgebungsluft schützen. Ein derartiger Schutz ist insbesondere dann empfehlenswert, wenn die Gebrauchseigenschaften des zu schützenden Polymers für längere Zeit erhalten bleiben sollen. Die oben genannten sterisch gehinderten Piperidinverbindungen eignen sich daher insbesondere hervorragend zur Langzeitstabilisierung organischer Polymere und der daraus hergestellten Gegenstände.

Der Ozongehalt der Luft unterliegt größeren Schwankungen; der für das organische Polymer relevante Ozongehalt ergibt sich meist aus der über die Gebrauchsdauer gemittelten Konzentration (Durchschnittskonzentration).

Ein höherer Ozongehalt bewirkt in der Regel eine stärkere Schädigung des Polymers. Da die erfindungsgemäßen Ozonstabilisatoren die Schädigung des Polymers zu verhindern vermögen, ist deren Einsatz besonders dann vorteilhaft, wenn während der Gebrauchsdauer des Polymers höhere Ozonkonzentrationen in der Umgebungsluft auftreten. Es hat sich gezeigt, daß organische Polymere ohne erfindungsgemäße Stabilisierung bereits unterhalb einer Durchschnittskonzentration von 15 µg Ozon pro Kubikmeter Luft deutlich geschädigt werden. Besonders vorteilhaft werden organische Polymere gemäß vorliegender Erfindung gegen Schädigung durch Ozon stabilisiert, wenn die über die Gebrauchsdauer gemittelte Ozonkonzentration 10 $\mu g/m^3$, insbesondere 30 $\mu g/m^3$ überschreitet, beispielsweise bei Durchschnittskonzentrationen von mehr als 20 $\mu g/m^3$, insbesondere mehr als 40 $\mu g/m^3$, vor allem mehr als 50 $\mu g/m^3$.

Von Bedeutung ist insbesondere die Verwendung der im folgenden unter (a') bis (f') beschriebenen Klassen von Piperidinen, die mindestens eine Gruppe der Formel I, wie oben angegeben, tragen:

(a') Verbindungen der Formel Ia

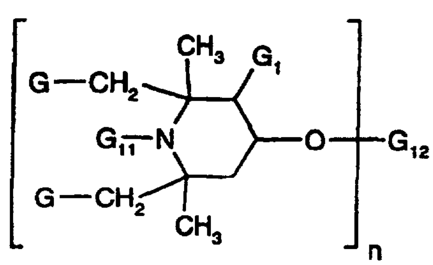

(Ia)

worin n eine Zahl von 1 bis 4 bedeutet,
$G_1$ und $G_1$ unabhängig voneinander Wasserstoff oder Methyl darstellen,
$G_{11}$ Wasserstoff, $O^{\cdot}$, Hydroxy, NO, $-CH_2CN$, $C_1$-$C_{18}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, Benzyloxy, Glycidyl oder eine Gruppe $-CH_2CH(OH)$-Z bedeutet, wobei $G_{11}$ vorzugsweise Wasserstoff, $C_1$-$C_4$-Alkyl, Allyl, Benzyl, Acetyl oder Acryloyl ist,
Z Wasserstoff, Methyl oder Phenyl darstellt, und wenn n 1 ist,
$G_{12}$ Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 Kohlenstoffatomen, einer cycloaliphatischen Carbonsäure mit 7 bis 15 Kohlenstoffatomen, einer α,β-ungesättigten Carbonsäure mit 3 bis 5 Kohlenstoffatomen oder einer aromatischen Carbonsäure mit 7 bis 15 Kohlenstoffatomen bedeutet, wobei die Carbonsäure jeweils im aliphatischen, cycloaliphatischen oder aromatischen Teil mit 1 bis 3 $-COOZ_{12}$ substituiert sein kann,
$Z_{12}$ Wasserstoff, $C_1$-$C_{20}$-Alkyl, $C_3$-$C_{12}$-Alkenyl, $C_5$-$C_7$-Cycloalkyl, Phenyl oder Benzyl ist, und wenn n 2 ist,
$G_{12}$ $C_2$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil mit 1 oder 2 Gruppen $-COOZ_{12}$ substituiert sein kann, und
wenn n 3 ist,
$G_{12}$ einen dreiwertigen Rest einer aliphatischen, cycloaliphatischen oder aromatischen Tricarbonsäure, der im aliphatischen, cycloaliphatischen oder aromatischen Teil mit $-COOZ_{12}$ substituiert sein kann, einer aromatischen Tricarbaminsäure oder einer Phosphor enthaltenden Säure oder einen dreiwertigen Silylrest bedeutet, und
wenn n 4 ist,
$G_{12}$ einen vierwertigen Rest einer aliphatischen, cycloaliphatischen oder aromatischen Tetracarbonsäure bedeutet.

Unter den angegebenen Carbonsäureresten sind dabei jeweils Reste der Formel $(-CO)_nR$, wobei die Bedeutung von n oben angegeben ist, und sich die Bedeutung von R aus der angegebenenen Definition ergibt.

Bedeuten etwaige Substituenten $C_1$-$C_{12}$-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $G_{11}$ oder $G_{12}$ z.B. die oben angeführten Gruppen und dazu noch beispielsweise n-Tridecyl, n-Tetradecyl, n-Hexadecyl oder n-Octadecyl darstellen.

Wenn $G_{11}$ $C_3$-$C_8$-Alkenyl-bedeutet, so kann es sich z.B. um 1-Propenyl, Allyl, Methallyl, 2-Butenyl, 2-Pentenyl, 2-Hexenyl, 2-Octenyl oder 4-tert-Butyl-2-butenyl handeln.

$G_{11}$ ist als $C_3$-$C_8$-Alkinyl bevorzugt Propargyl.

Als $C_7$-$C_{12}$-Aralkyl ist $G_{11}$ insbesondere Phenethyl und vor allem Benzyl.

$G_{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $G_{12}$ einen einwertigen Rest einer Carbonsäure, so stellt $G_{12}$ beispielsweise einen Essigsäure-, Capronsäure-, Stearinsäure-, Acrylsäure-, Methacrylsäure-, Benzoe- oder β-(3,5-Di-tert-butyl-4-hydroxy-phenyl)-propionsäure-Rest dar.

Bedeutet $G_{12}$ einen einwertigen Silylrest, so stellt $G_{12}$ beispielsweise einen Rest der Formel $-(C_jH_{2j})-Si(Z')_2Z''$ dar, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten.

Bedeutet $G_{12}$ einen zweiwertigen Rest einer Dicarbonsäure, so stellt $G_{12}$ beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert-butyl-4-hydroxybenzyl)-malonsäure- oder BicycloheptendicarbonsäureRest dar.

Stellt $G_{12}$ einen dreiwertigen Rest einer Tricarbonsäure dar, so bedeutet $G_{12}$ beispielsweise einen Trimellitsäure-, Citronensäure- oder Nitrilotriessigsäure-Rest.

Stellt $G_{12}$ einen vierwertigen Rest einer Tetracarbonsäure dar, so bedeutet $G_{12}$ beispielsweise den vierwertigen Rest von Butan-1,2,3,4-tetracarbonsäure oder von Pyromellitsäure.

Bedeutet $G_{12}$ einen zweiwertigen Rest einer Dicarbaminsäure, so stellt $G_{12}$ beispielsweise einen Hexamethylendicarbaminsäure- oder einen 2,4-Toluylen-dicarbaminsäure-Rest dar.

Bevorzugt sind Verbindungen der Formel Ia, worin G Wasserstoff ist, $G_{11}$ Wasserstoff oder Methyl ist, n 2 ist und $G_{12}$ der Diacylrest einer aliphatischen Dicarbonsäure mit 4 bis 12 Kohlenstoffatomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert-butyl-4-hydroxyphenyl)-propionat
9) Di-(1-benzyl-2,2,6,6-tetramethylpiperidin-4-yl)-maleinat

10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellitsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b') Verbindungen der Formel Ib

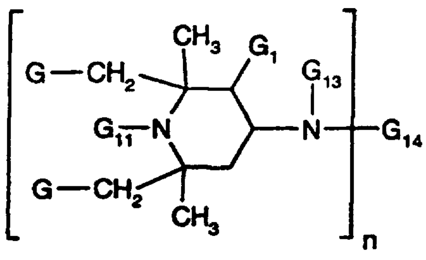

(Ib)

worin n die Zahl 1 oder 2 bedeutet,
$G_1$ $G_1$ und $G_{11}$ die unter (a') angegebene Bedeutung haben,
$G_{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

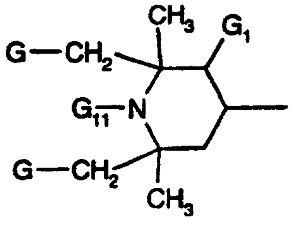

ist, und
wenn n 1 ist,
$G_{14}$ Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl; Glycidyl, eine Gruppe der Formel $-CH_2-CH(OH)-Z$ oder der Formel -CONH-Z ist, worin Z Wasserstoff, Methyl oder Phenyl bedeutet, und
wenn n 2 ist,
$G_{14}$ $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, dass $G_{13}$ nicht Alkanoyl, Alkenoyl oder Benzoyl bedeutet, $G_{14}$ auch 1-Oxo-$C_2$-$C_{12}$-alkylen, einen zweiwertigen Rest einer aliphatischen, cycloaliphatischen oder aromatischen Dicarbonsäure oder Dicarbaminsäure oder auch die Gruppe -CObedeuten kann, oder,
wenn n 1 ist,
$G_{13}$ und $G_{14}$ zusammen den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a') angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $G_{13}$ insbesondere Phenylethyl oder vor allem Benzyl. Als $C_2$-$C_5$-Hydroxyalkyl ist $G_{13}$ insbesondere 2-Hydroxyethyl oder 2-Hydroxypropyl.

$G_{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $G_{14}$ $C_2$-$C_8$-Alkenyl, dann handelt es sich beispielsweise um Allyl, Methallyl, 2-Butenyl, 2-Pentenyl, 2-Hexenyl oder 2-Octenyl.

$G_{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel 1b, worin n 1 oder 2 ist, G Wasserstoff ist, $G_{11}$ Wasserstoff oder Methyl ist, $G_{13}$ Wasserstoff, $C_1$-$C_{12}$-Alkyl oder eine Gruppe der Formel

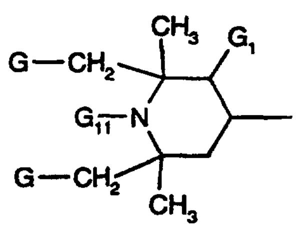

ist und $G_{14}$ im Fall von n=1 Wasserstoff oder $C_1$-$C_{12}$-Alkyl ist, und im Fall von n=2 $C_2$-$C_8$-Alkylen oder 1-Oxo-$C_2$-$C_8$-alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropyten-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel

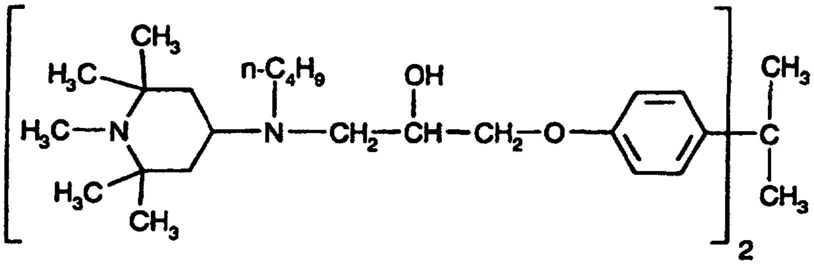

47) 4-(Bis-2-hydroxyethyl-amino)-1,2,2,6,6-pentamethylpiperidin
48) 4-(3-Methyl-4-hydroxy-5-tert-butyl-benzoesäureamido)-2,2,6,6-tetra-methylpiperidin
49) 4-Methacrylamido-1,2,2,6,6-pentamethylpiperidin

(c') Verbindungen der Formel Ic

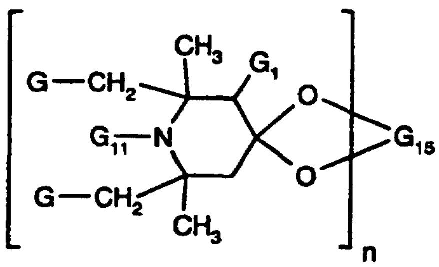

(Ic)

worin n die Zahl 1 oder 2 bedeutet, $G_1$ $G_1$ und $G_{11}$ die unter (a') angegebene Bedeutung haben, und
wenn n 1 ist,
$G_{15}$ $C_2$-$C_8$-Alkylen oder $C_2$-$C_8$-Hydroxyalkylen oder $C_4$-$C_{22}$-Acyloxyalkylen ist, und
wenn n 2 ist,
$G_{15}$ die Gruppe $(-CH_2)_2C(CH_2-)_2$ bedeutet.

Bedeutet $G_{15}$ $C_2$-$C_8$-Alkylen oder $C_2$-$C_8$-Hydroxyalkylen, so stellt $G_{15}$ beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $G_{15}$ beispielsweise 2-Ethyl-2-acetoxymethylpropylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5''-(1'',3''-dioxan)-2''-spiro--4''-(2''',2''',6''',6'''-tetramethylpiperidin)

(d') Verbindungen der Formeln Id, Ie und If, wobei Verbindungen der Formel If bevorzugt sind,

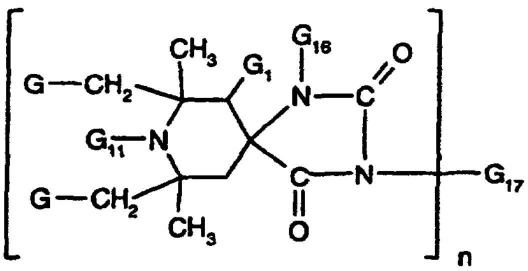

(Id)

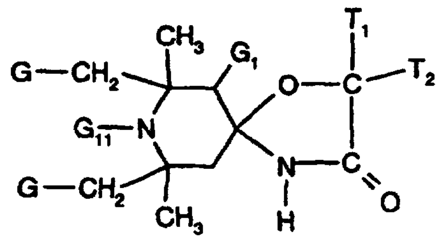

(Ie)

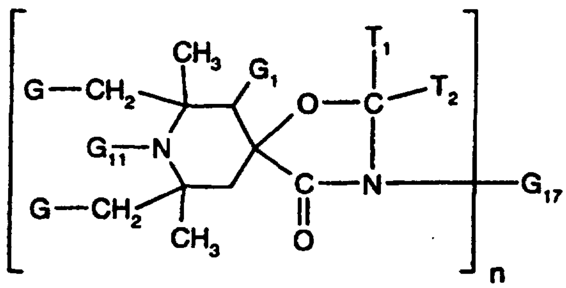

(If)

worin n die Zahl 1 oder 2 bedeutet, $G_1$ $G_1$ und $G_{11}$ die unter (a') angegebene Bedeutung haben,
$G_{16}$ Wasserstoff, $C_1$-$C_{12}$-Alkyl, Allyl, Benzyl, Glycidyl oder $C_2$-$C_6$-Alkoxyalkyl ist, und
wenn n 1 ist,
$G_{17}$ Wasserstoff, $C_1$-$C_{12}$-Alkyl, $C_3$-$C_5$-Alkenyl, $C_7$-$C_9$-Aralkyl, $C_5$-$C_7$-Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)p-COO-Q$ oder der Formel $-(CH_2)p-O-CO-Q$ ist, worin p 1 oder 2 und Q $C_1$-$C_4$-Alkyl oder Phenyl ist, und
wenn n 2 ist,
$G_{17}$ $C_2$-$C_{12}$-Alkylen, $C_4$-$C_{12}$-Alkenylen, $C_6$-$C_{12}$-Arylen, eine Gruppe $-CH_2CH(OH)-CH_2-O-D-O-CH_2-CH(OH)-CH_2-$, worin D $C_2$-$C_{10}$-Alkylen, $C_6$-$C_{15}$-Arylen, $C_6$-$C_{12}$-Cycloalkylen ist, oder eine Gruppe $-CH_2CH(OZ')CH_2-(OCH_2CH(OZ')CH_2)_2-$ bedeutet, worin
Z' Wasserstoff, $C_1$-$C_{18}$-Alkyl, Allyl, Benzyl, $C_2$-$C_{12}$-Alkanoyl oder Benzoyl ist,
$T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_8$-Aralkyl bedeuten oder $T_1$ und $T_2$ zusammen mit dem Kohlenstoffatom and das sie gebunden sind einen $C_5$-$C_{14}$-Cycloalkanring bilden.

Bedeuten etwaige Substituenten $C_1$-$C_{12}$-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert-Butoxymethyl, Ethoxyethyl, Ethoxypropyl, n-Butoxyethyl, tert-Butoxyethyl, Isopropoxyethyl oder Pro-

poxypropyl dar.

Stellt $G_{17}$ $C_3$-$C_5$-Alkenyl dar, so bedeutet $G_{17}$ beispielsweise 1-Propenyl, Allyl, Methallyl, 2-Butenyl oder 2-Pentenyl.

Als $C_7$-$C_9$-Aralkyl sind $G_{17}$, $T_1$ und $T_2$ insbesondere Phenethyl oder vor allem Benzyl. Bilden $T_1$ und $T_2$ zusammen mit dem Kohlenstoffatom einen Cycloalkanring, so kann dies z.B. ein Cyclopentan-, Cyclohexan-, Cyclooctan- oder Cyclododecanring sein.

Bedeutet $G_{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $G_{17}$, $T_1$ und $T_2$ insbesondere Phenyl, α- oder β-Naphthyl, die gegebenenfalls mit Halogen oder $C_1$-$C_4$-Alkyl substituiert sind.

Stellt $G_{17}$ $C_2$-$C_{12}$-Alkylen dar, so handelt es sich z.B. um Ethylen, Propylen, 2,2-Dimethylpropylen; Tetramethylen, Hexamethylen, Octamethylen, Decamethylen oder Dodecamethylen.

Als $C_4$-$C_{12}$-Alkenylen bedeutet $G_{17}$ insbesondere 2-Butenylen, 2-Pentenylen oder 3-Hexenylen.

Bedeutet $G_{17}$ $C_6$-$C_{12}$-Arylen, so stellt $G_{17}$ beispielsweise o-, m- oder p-Phenylen, 1,4-Naphthylen oder 4,4'-Diphenylen dar.

Bedeutet Z' $C_2$-$C_{12}$-Alkanoyl, so stellt es beispielsweise Propionyl, Butyryl, Octanoyl, Dodecanoyl, aber bevorzugt Acetyl dar.

D hat als $C_2$-$C_{10}$-Alkylen, $C_6$-$C_{15}$-Arylen oder $C_6$-$C_{12}$-Cycloalkylen die unter (b') angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro- [4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4.5]decan und bevorzugt:
65) 8-Acetyl-3-dodecyl-1,3,8-triaza-7,7,9,9-tetramethylspiro[4.5]-decan-2,4-dion

oder die Verbindungen der folgenden Formeln:

66)

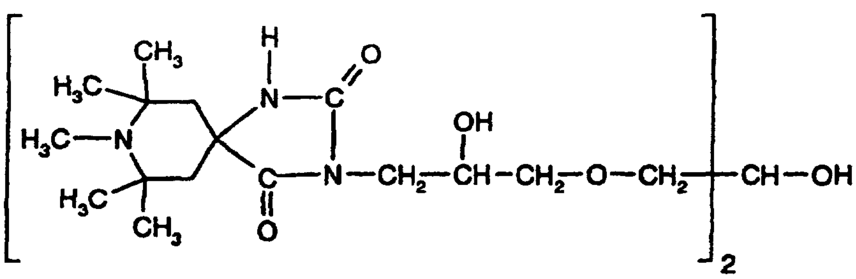

67)

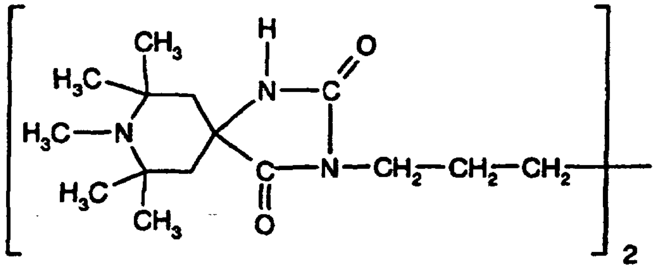

68)

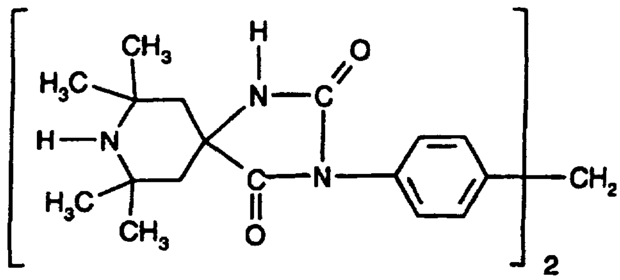

69)

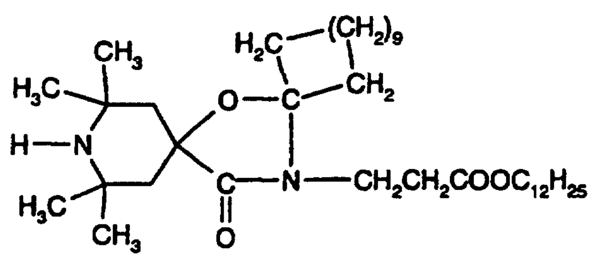

(e') Verbindungen der Formel Ig, die ihrerseits bevorzugt sind,

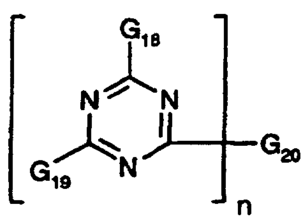

(Ig)

worin n die Zahl 1 oder 2 ist und $G_{18}$ eine Gruppe der Formel

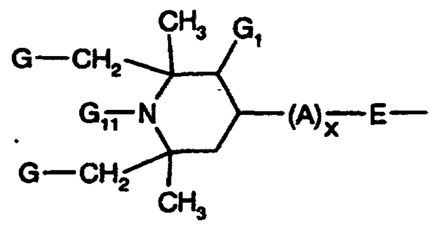

bedeutet, worin G und $G_{11}$ die unter (a') angegebene Bedeutung haben,
$G_1$ und $G_2$ Wasserstoff, Methyl oder gemeinsam einen Substituenten =O bedeuten,
E -O- oder $-NG_{13}-$ ist,
A $C_2$-$C_6$-Alkylen oder-$(CH_2)_3$-O-darstellt,
x die Zahl O oder 1 bedeutet,
$G_{13}$ Wasserstoff, $C_1$-$C_{12}$-Alkyl, $C_2$-$C_5$-Hydroxyalkyl oder $C_5$-$C_7$-Cycloalkyl darstellt,
$G_{19}$ gleich $G_{18}$ oder eine der Gruppen $-NG_{21}G_{22}$, $-OG_{23}$, $-NHCH_2OG_{23}$ oder $-N(CH_2OG_{23})_2$ ist,
$G_{20}$, wenn n = 1 ist, gleich $G_{18}$ oder $G_{19}$, und wenn n = 2 ist, $G_{20}$ eine Gruppe -E-B-E- ist,
worin B $C_2$-$C_8$-Alkylen oder durch 1 oder 2 Gruppen $-N(G_{21})-$ unterbrochenes $C_2$-$C_8$-Alkylen bedeutet,
$G_{21}$ $C_1$-$C_{12}$-Alkyl, Cyclohexyl, Benzyl oder $C_1$-$C_4$-Hydroxyalkyl oder eine Gruppe der Formel

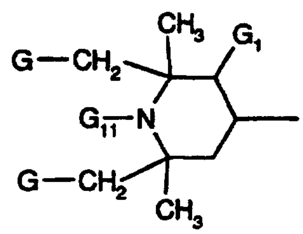

oder eine Gruppe der Formel

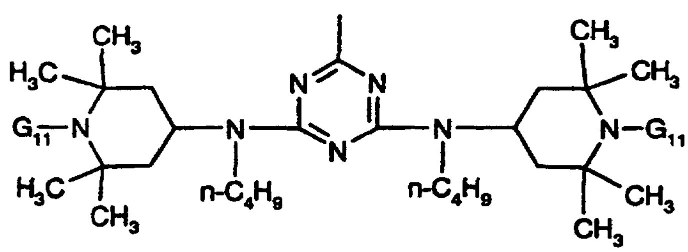

bedeutet,
$G_{22}$ $C_1$-$C_{12}$-Alkyl, Cyclohexyl, Benzyl oder $C_1$-$C_4$-Hydroxyalkyl darstellt, oder $G_{21}$ und $G_{22}$ zusammen $C_4$-$C_5$-Alkylen oder $C_4$-$C_5$-Oxaalkylen wie beispielsweise $-CH_2CH_2OCH_2CH_2-$ oder eine Gruppe der Formel $-CH_2CH_2N(G_{11})CH_2CH_2-$ darstellen, und
$G_{23}$ Wasserstoff, $C_1$-$C_{12}$-Alkyl oder Phenyl bedeutet.

Bedeuten etwaige Substituenten $C_1$-$C_{12}$-Alkyl, so stellen sie beispielsweise Methyl, Ethyl, n-Propyl, n-Butyl, sek-Butyl, tert-Butyl, n-Hexyl, n-Octyl, 2-Ethylhexyl, n-Nonyl, n-Decyl, n-Undecyl oder n-Dodecyl dar.

Bedeuten etwaige Substituenten $C_2$-$C_5$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$-Alkylen, so stellt es beispielsweise Ethylen, Propylen, 2,2-Dimethylpropylen, Tetramethylen oder Hexamethylen dar.

Stellen $G_{21}$ und $G_{22}$ zusammen $C_4$-$C_5$-Alkylen oder Oxaalkylen dar, so bedeutet dies beispielsweise Tetramethylen, Pentamethylen oder 3-Oxapentamethylen.

Beispiele für Polyalkylpiperidin-Verbindungen dieser Klasse sind die Verbindungen der folgenden Formeln:

70)

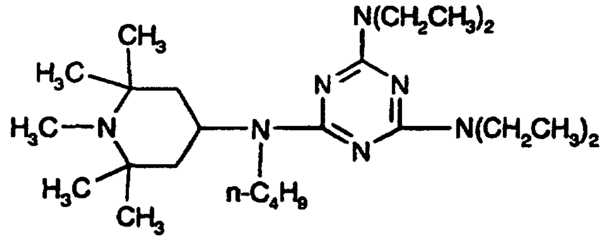

71)

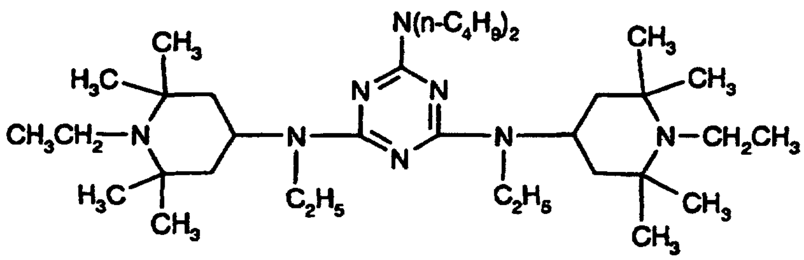

72)

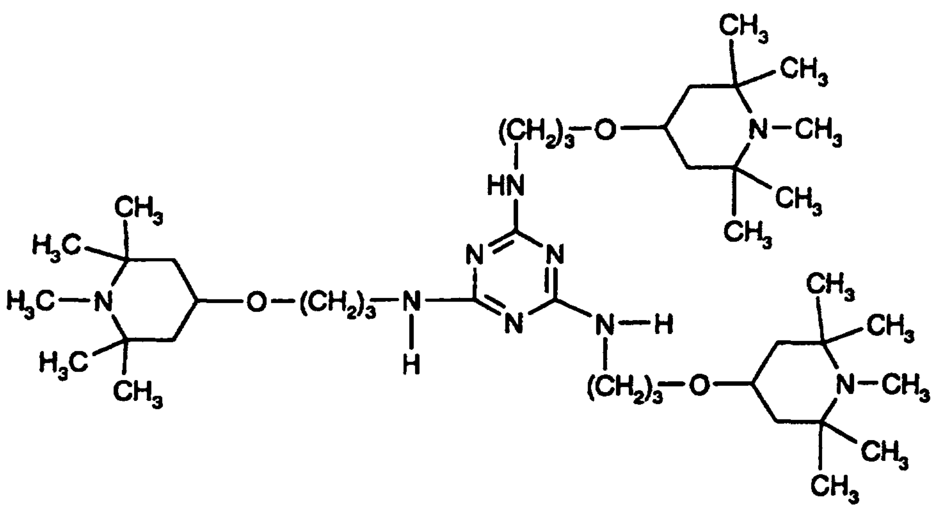

73)

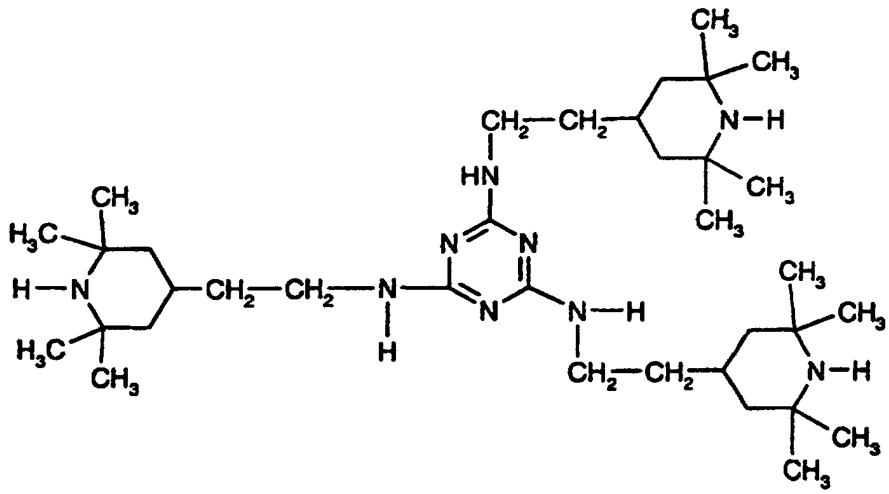

74)

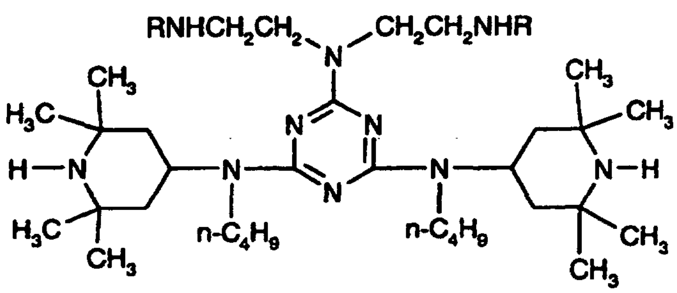

R =

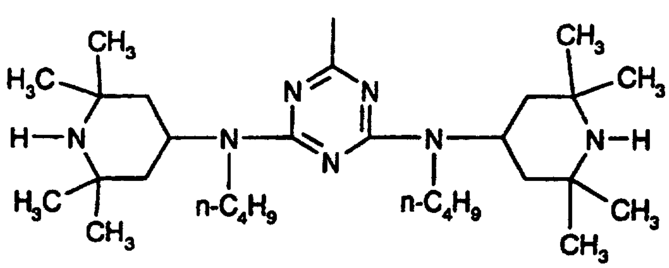

75)

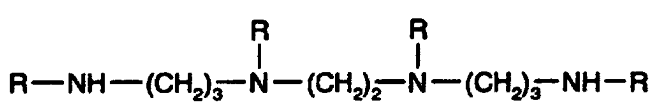

R hat die gleiche Bedeutung wie in Verbindung 74.

76)

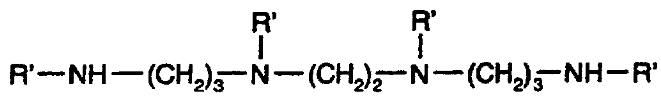

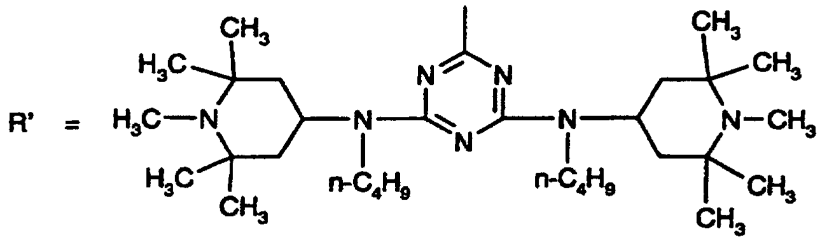

77)

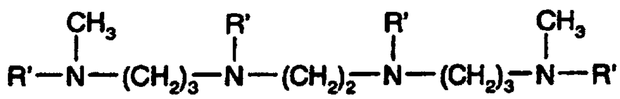

R' hat die gleiche Bedeutung wie in Verbindung 76.

78)

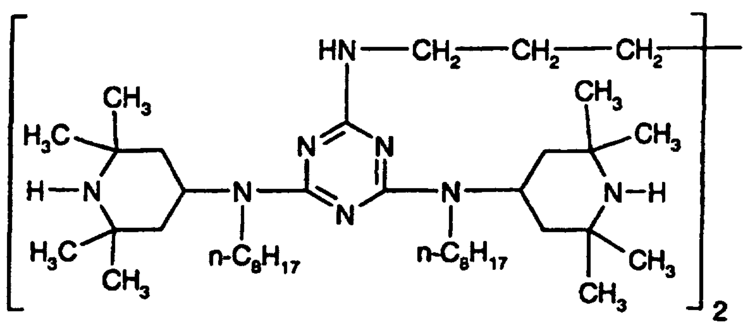

79)

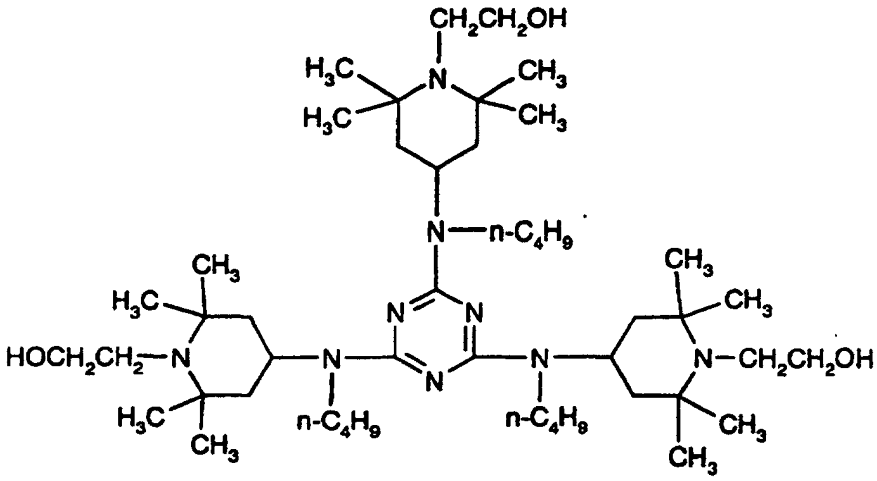

80)

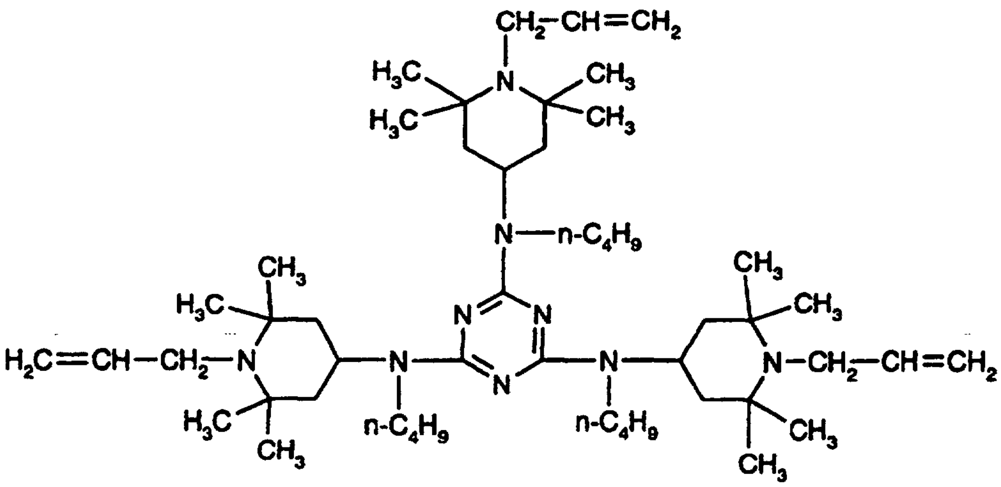

(f') Oligomere oder polymere Verbindungen, deren wiederkehrende Struktureinheit einen 2,2,6,6-Tetraalkylpiperidinrest sowie einen Triazinrest enthält, insbesondere Polyester, Polyether, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Verbindungen dieser Klasse sind die Verbindungen der folgenden Formeln, wobei m eine Zahl von 2 bis etwa 200 bedeutet.

84)

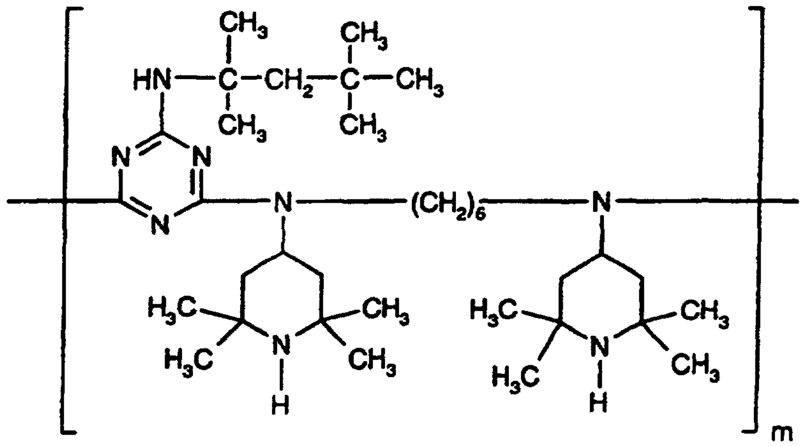

87)

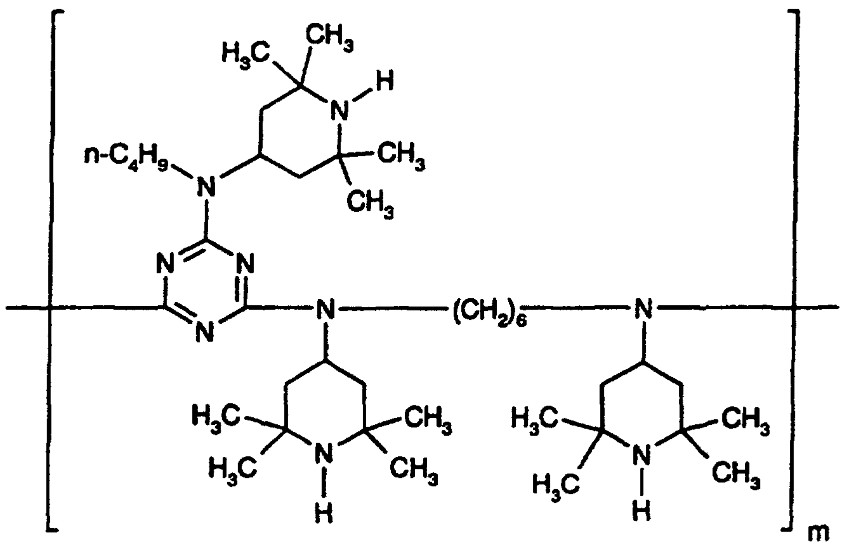

92)

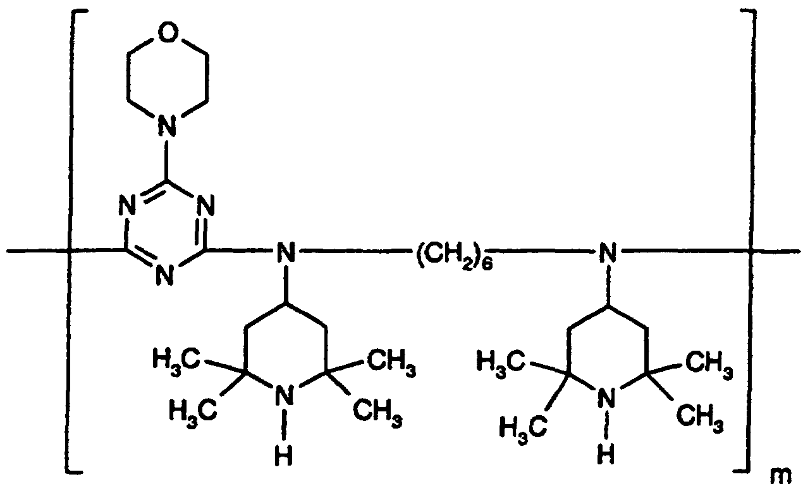

95)

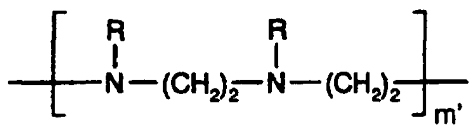

worin R einen Rest der Formel

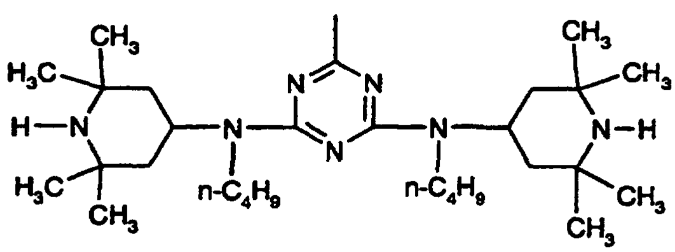

ist oder für eine Verzweigung der Kette

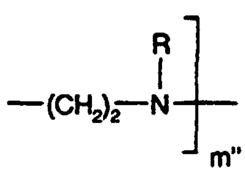

steht, m' und m" jeweils eine ganze Zahl aus dem Bereich von 0 bis 200 bedeuten, mit der Bedingung, dass m' + m" = m.

Weiterhin wurde gefunden, daß eine Kombination eines der oben genannten sterisch gehinderten Amine mit einem polymeren sterisch gehinderten Amin, welches keine Triazineinheiten enthält, ebenfalls als Ozonstabilisator wirksam ist. Gegenstand der Anmeldung ist daher auch ein Verfahren zur Stabilisierung eines organischen Polymeren gegen Ozon in der Umgebungsluft, dadurch gekennzeichnet, daß man dem Polymeren als Stabilisator ein Gemisch

beigibt enthaltend

A) eine monomere sterisch gehinderte Piperidinverbindung und/oder eine oligomere oder polymere sterisch gehinderte Piperidinverbindung, welche eine oder mehrere Triazineinheiten enthält, und/oder ein sekundäres sterisch gehindertes Amin und
B) eine oligomere oder polymere sterisch gehinderte Piperidinverbindung, welche keine Triazineinheit enthält.

Beispiele für obige Komponente B sind die folgenden Verbindungen:

81)

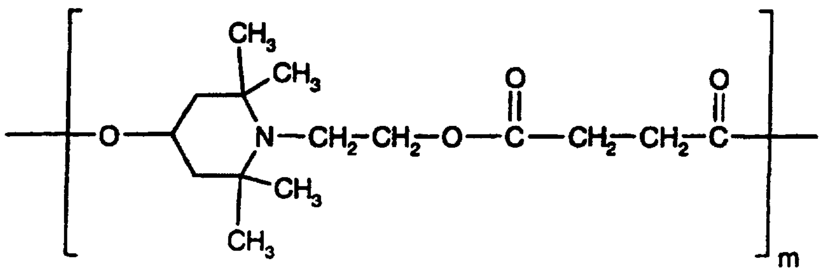

82)

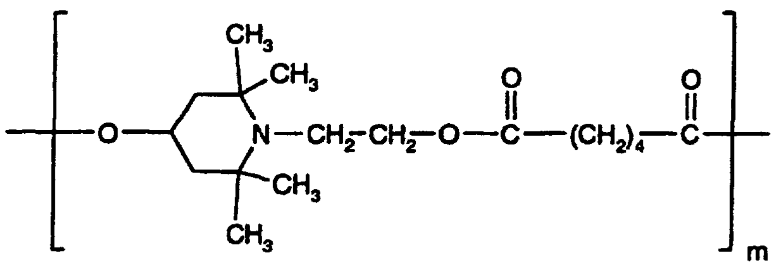

83)

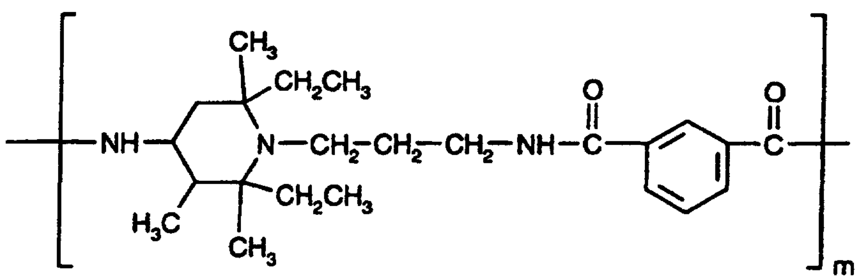

85)

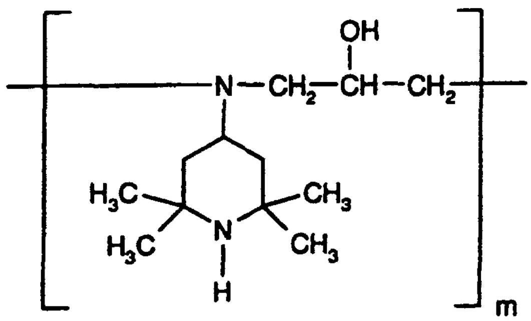

86)

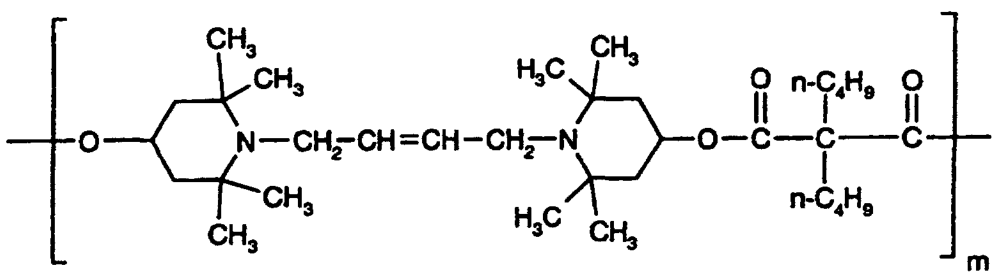

88)

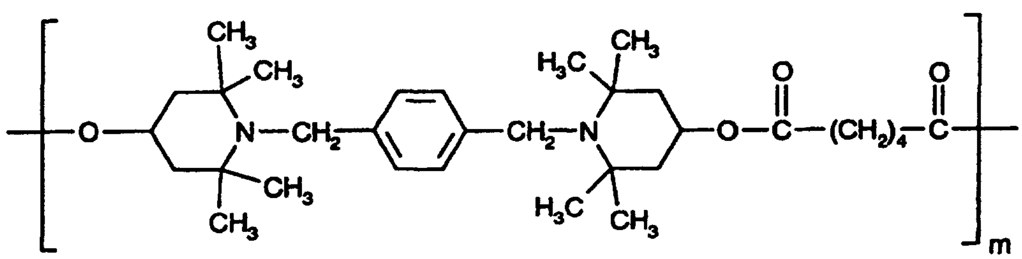

89)

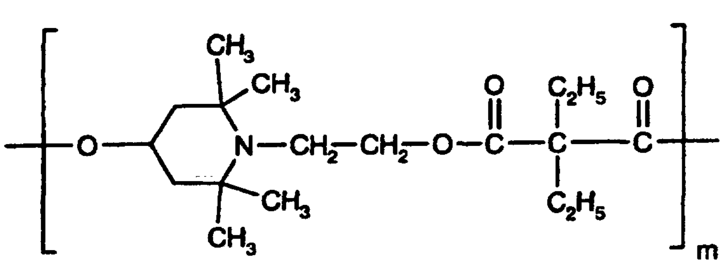

90)

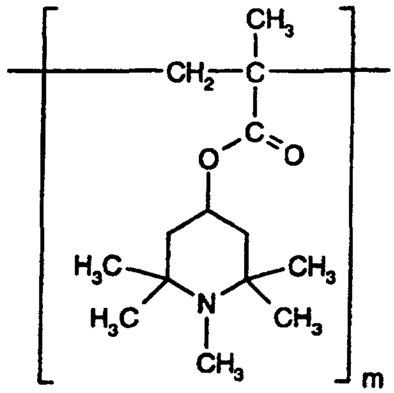

91)

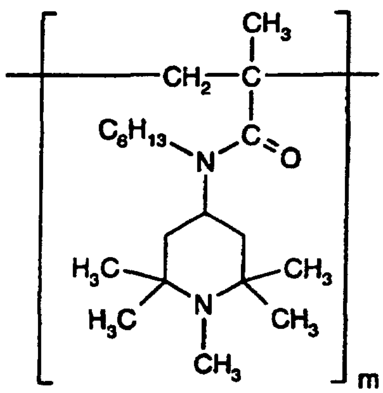

93)

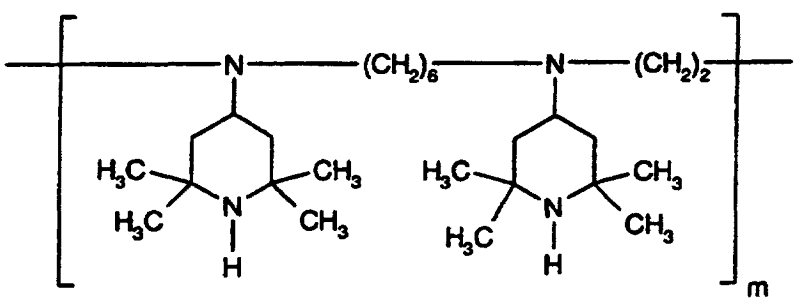

94)

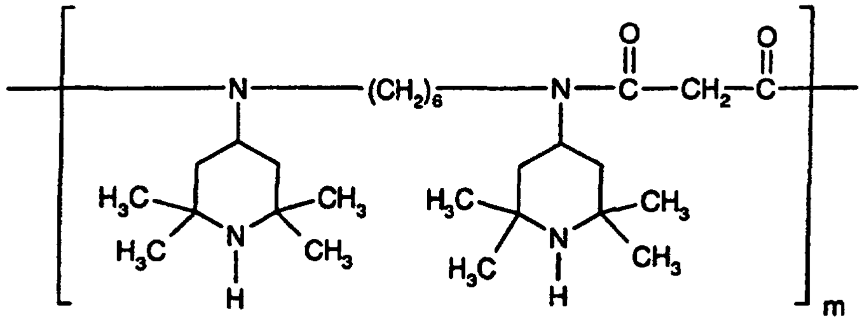

Weitere Beispiele für polymere Verbindungen ohne Triazineinheiten sind Umsetzungsprodukte von Verbindungen der Formel

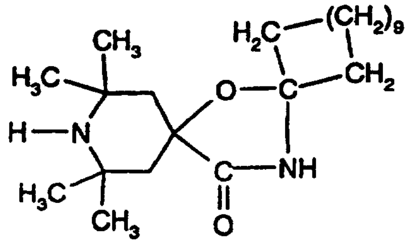

mit Epichlorhydrin; Polyester aus Butan-1,2,3,4-tetracarbonsäure mit einem bifunktionellen Alkohol der Formel

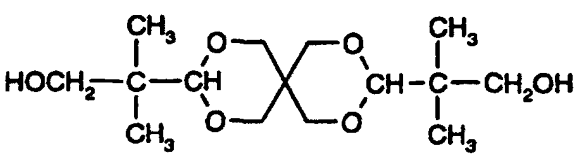

dessen von der Tetracarbonsäure stammenden Carboxyl-Seitenketten mit 2,2,6,6-Tetramethyl-4-hydroxy-piperidin verestert sind; Verbindungen der Formel

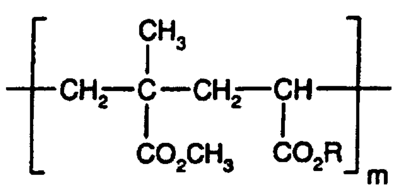,

wobei ca. ein Drittel der Reste R die Bedeutung $-C_2H_5$ haben und die anderen

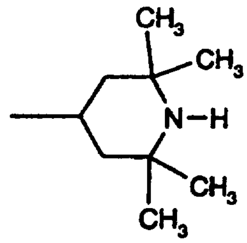

bedeuten, und m eine Zahl aus dem Bereich von 2 bis 200 ist; oder Copolymerisate, deren wiederkehrende Einheit aus zwei Einheiten

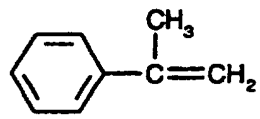

und jeweils einer Einheit

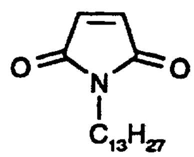

und einer Einheit

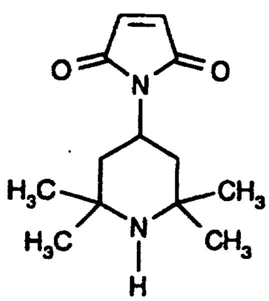

aufgebaut ist.

Bevorzugt zur Verwendung im erfindungsgemäßen Verfahren sind die Tetramethylpiperidine vom Typ (a'), (b') und besonders (e') und (f) obiger Aufzählung, vor allem solche, worin die wirksame Verbindung neben dem Rest der Formel I zusätzlich mindestens eine Triazineinheit enthält. Besonders bevorzugt sind sekundäre sterisch gehinderte Amine.

Von besonderem Interesse sind Verbindungen der Formel Ia, worin n 2 ist und $G^{12}$ einen Rest einer aliphatischen Dicarbonsäure mit 2 bis 12 C-Atomen darstellt, der durch -COOZ$^{12}$ substituiert sein kann, wobei $Z^{12}$ $C_1$-$C_{20}$-Alkyl ist; Verbindungen der Formel Ie, worin n 1 oder 2 ist,
$G^{18}$ und $G^{19}$ eine Gruppe der Formel II bedeutet, E -O- oder -NG$^{13}$- ist, A $C_2$-$C_6$-Alkylen und x eine der Zahlen O oder 1 bedeuten,
$G^{13}$ Wasserstoff, $C_1$-$C_{12}$-Alkyl oder Cyclohexyl darstellt,
$G^{20}$, wenn n = 1 ist, gleich $G^{18}$, und wenn n = 2 ist, eine Gruppe -E-B-E- ist, worin B $C_2$-$C_8$-Alkylen oder durch 1 oder 2 Gruppen -N($G^{21}$)- unterbrochenes $C_2$-$C_8$-Alkylen bedeutet,
$G^{21}$ $C_1$-$C_{12}$-Alkyl, Cyclohexyl, Benzyl oder $C_2$-$C_4$-Hydroxyalkyl oder eine Gruppe der Formel I ist, oder $G^{21}$ eine Gruppe

der Formel

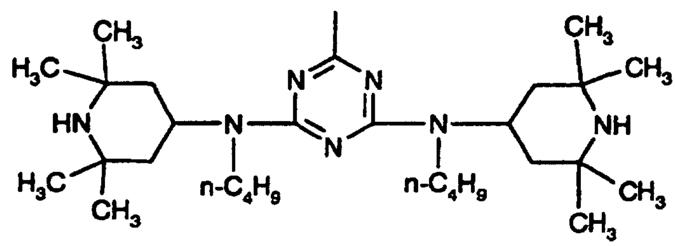

bedeutet; sowie
oligomere Verbindungen mit 2 bis 10 wiederkehrenden Einheiten, insbesondere Oligoamine, die neben Resten der Formel I auch Triazinreste enthalten. Solche Oligoamine setzen sich vielfach zusammen aus Polyamineinheiten wie z.B. Hexamethylentetramin oder Polymethylentetramin, die über divalente Einheiten der Formel

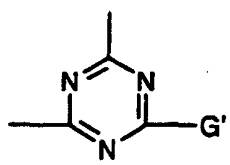

miteinander verknüpft sind, worin G' beispielsweise $C_4$-$C_8$-Alkylamino, Cyclohexylamino, Morpholino oder N-(2,2,6,6-Tetramethylpiperidin-4-yl)-N-alkylamino ist, und deren allenfalls noch freie NH-Gruppen in der Kette oft durch Reste vom Typ 2,2,6,6-Tetramethylpiperidin-4-yl (Formel I) substituiert sind.

Verbindungen von besonderem technischem Interesse sind beispielsweise die der folgenden Formeln (m bezeichnet eine Zahl aus dem Bereich 2 bis 10):

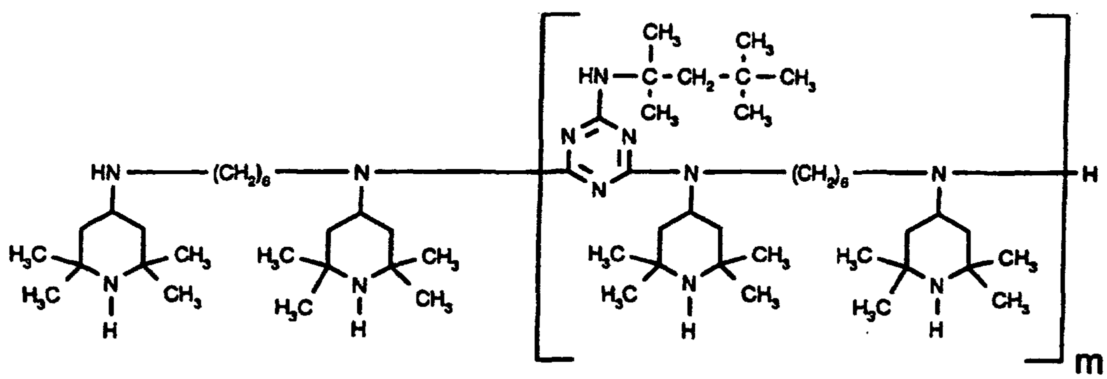

(Verbindung Nr. 84; CAS-No. 70624-18-9);

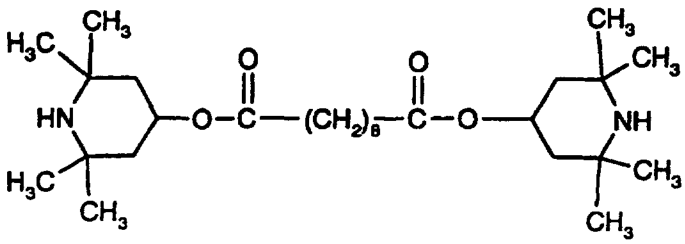

(Verbindung Nr. 13)

sowie das Gemisch aus 1 Gewichtsteil der Verbindung A

(A)

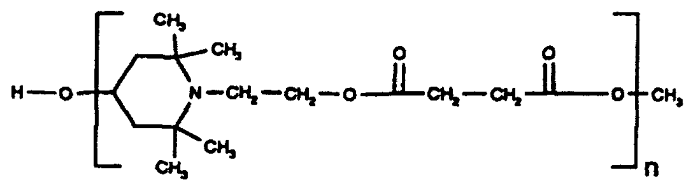

(CAS-No. 65447-77-0);

und 1 Gewichtsteil der obigen Verbindung Nr. 84.

Die im erfindungsgemäßen Verfahren verwendeten Ozonstabilisatoren sind in organischen Polymeren überdies wirksam als Stabilisatoren gegen die schädigenden Einflüsse von Licht, Luftsauerstoff und Wärme.

Die sekundären gehinderten Amine werden erfindungsgemäß eingesetzt in einer Menge von 0,02 bis 5 %, bezogen auf das Gewicht des zu stabilisierenden Polymers. Bevorzugte Einsatzkonzentrationen sind 0,05 bis 2 %, vor allem 0,05 bis 1 %, jeweils bezogen auf das Gewicht des zu stabilisierenden Polymers.

Im erfindungsgemäßen Verfahren ist insbesondere der Zusatz solcher sterisch gehinderten Amine bevorzugt, deren Molekulargewicht bezw. mittleres Molekulargewicht im Bereich von 300 bis 10000, vor allem im Bereich 1500 bis 10000, beispielsweise im Bereich 2000 bis 7500 liegt.

Die genannten sterisch gehinderten Amine sind bekannte Verbindungen; viele davon sind kommerziell erhältlich.

Häufig enthalten die erfindungsgemäß stabilisierten organischen Polymere noch weitere konventionelle Additive wie z.B. Antioxidantien, Lichtschutzmittel, Metalldesaktivatoren, Verarbeitungsstabilisatoren, Nukleierungsmittel, Füllstoffe, Weichmacher, Gleitmittel, Emulgatoren, Pigmente, Rheologieadditive, Katalysatoren, Verlaufshilfsmittel, Optische Aufheller, Flammschutzmittel, Antistatika oder Treibmittel. Beispiele dafür sind die folgenden Zusätze:

1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Dinonyl-4-methylphenol, 2,4-Dimethyl-6-(1'-methyl-undec-1'-yl)-phenol, 2,4-Dimethyl-6-(1'methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocophefol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis [3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyol]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzy)-malonat.

1.9. Hydroxyrbenzyl-Aromaten, z.B. 1,3,5-Tris(3,5-di-tert-butyl-4-hydroxybenzyl)-2,4,6-trimethylbenzol, 1,4-Bis (3,5-di-tert-butyl-4-hydroxybenzyl)-2,3,5,6-tetramethylbenzol, 2,4,6-Tris-(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris (3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydrozyphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N, N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabiclyco-[2.2.2]-octan.

1.17. Amide der β-(3,5-Di-tert-butyl-4-hydrozyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl) hydrazid, N,N'-Bis[2-(3-[3,5-di-tert-butyl-4-hydroxyphenyl]-propionyloxy)ethyl]oxamid (Naugard®XL-1 der Firma Uniroyal).

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-Isopropoxy-diphenylamin, N-Phenyl-1-naphthylamin,N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300;

$$\left[R-CH_2CH_2-COO-CH_2CH_2-\right]_2$$

mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäure-methylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Uganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydro-xy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Weitere sterisch gehinderte Amine, soweit nicht bereits oben genannt wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxy-propoxy)-2-hydroxy-phenyl]-4,6-bis(2,4-dimethylphenyl)-1,3,5-triazin,2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl) hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N, N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris (nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-ditert-butyl-6-methylphenyl)-methylphosphit, Bis(2,4-di-tert-butyl-6-methylphenyl)-ethylphosphit, 2,2',2''-Nitrilo[triethyl-tris(3,3',5,5'-tetra-tert-buthyl-1,1'-biphenyl-2,2'-diyl)-phosphit], 2-Ethylhexyl-(3,3',5,5'-tetra-tert-butyl-1,1'-biphenyl-2,2'-diyl)-phosphit.

Besonders bevorzugt werden die folgenden Phosphite verwendet:

Tris(2,4-di-tert-butylphenyl)-phosphit (Irgafos®168, Ciba-Geigy), Tris(nonylphenyl)-phosphit,

(A) 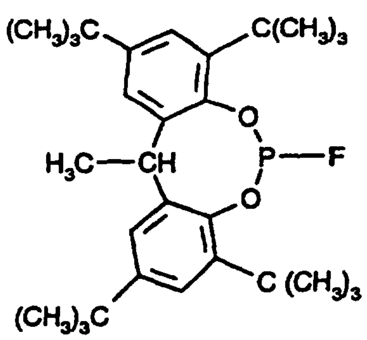

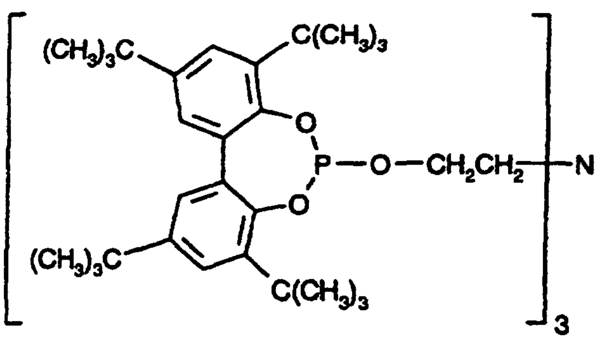 (B)

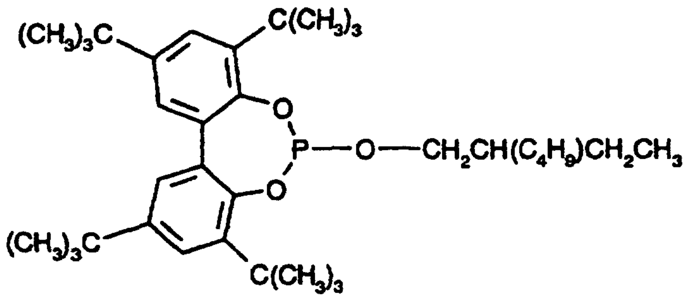

(C)

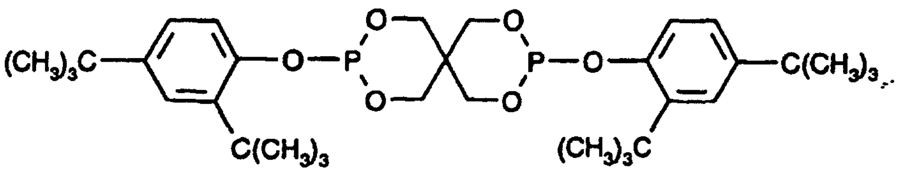

(D)

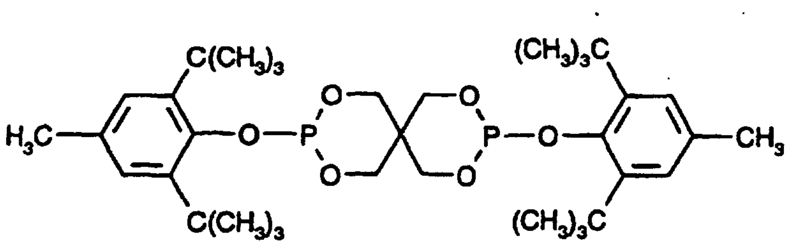

(E)

(F)

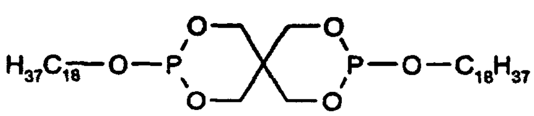

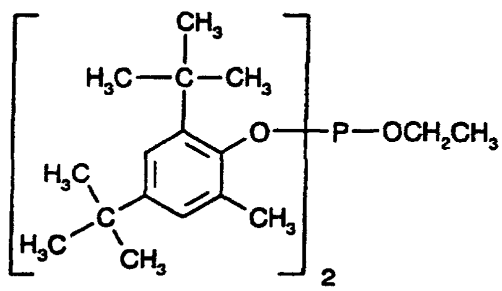

(G)

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecythydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäure-distearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Die konventionellen Zusätze gemäß obiger Liste werden meist in Konzentrationen von 0,01 bis 5 Gew.-% eingesetzt, bezogen auf das organische Polymer.

Erfindungsgemäß gegen den schädigenden Einfluß von Ozon stabilisierbare Polymere sind beispielsweise die folgenden:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beipielweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.

8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomound -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd oder deren Copolymere mit Bisglycidylethern.

13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-mphenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamid-imide, Polyetherimide, Polyesterimide, Polyhydantoine und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z.B. von Epoxyacrylaten, Urethan-acrylaten oder Polyester-acrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/-EPDM oder ABS, PVC/EVA, PVC/ABS. PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Besonders vorteilhaft lassen sich gemäß vorliegender Erfindung Polyolefine oder Polyolefin-Copolymere, z. B. gemäß Abschnitten 1 bis 3 obiger Liste, gegen Ozoneinwirkung schützen; von besonderer Bedeutung sind Polymere von Monooder Diolefinen, wie sie in Abschnitt 1 aufgeführt sind. Vor allem mit Polyethylen und Polypropylen werden gute Resultate erzielt. Auch Elastomere, insbesondere gefüllte Elastomere wie beispielsweise Gummi, u.a. für die Reifenherstellung, lassen sich so gegen schädigende Ozoneinwirkung stabilisieren.

Die Einarbeitung in die organischen Polymere, beispielsweise in die synthetischen organischen, insbesondere thermoplastischen Polymere, kann durch Zusatz der erfindungsgemäßen Gemische und gegebenenfalls weiterer Additive nach den in der Technik üblichen Methoden erfolgen. Die Einarbeitung kann zweckmäßig vor oder während der Formgebung, beispielsweise durch Mischen der pulverförmigen Komponenten oder durch Zusatz des Stabilisators zur Schmelze oder Lösung des Polymeren, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der erfindungsgemäßen Gemische in Polymere besteht in deren Zugabe vor oder während der Polymerisation der entsprechenden Monomeren bzw. vor der Vernetzung.

Die erfindungsgemäßen Gemische können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmäßig kann die Einarbeitung der erfindungsgemäßen Stabilisatoren nach folgenden Methoden erfolgen:

- als Emulsion oder Dispersion (z.B. zu Latices oder Emulsionspolymeren)
- als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Die so erhaltenen stabilisierten Polymerzusammensetzungen können nach den üblichen Methoden, wie z.B. durch Heißpressen, Spinnen, Extrudieren oder Spritzgießen, in geformte Gegenstände überführt werden, wie z.B. in Fasern, Folien, Bändchen, Platten, Stegplatten, Gefäße, Rohre und sonstige Profile.

Die so stabilisierten Polymere zeichnen sich aus durch hohe Witterungsbeständigkeit, vor allem bei erhöhter Ozonkonzentration in der Umgebungsluft. Sie behalten dadurch auch im Außengebrauch lange Zeit ihre mechanischen Eigenschaften sowie ihre Farbe und ihren Glanz.

Die nachfolgenden Beispiele illustrieren die Erfindung weiter. Alle Angaben in Teilen oder Prozenten in den Beispielen beziehen sich auf das Gewicht des zu stabilisierenden Polymers, soweit nichts anderes angegeben ist. Folgende Abkürzungen werden verwendet:

PP Polypropylen
d Tage

In den Beispielen werden Stabilisatoren folgender Formeln eingesetzt:

Stabilisator A (Kontrolle):

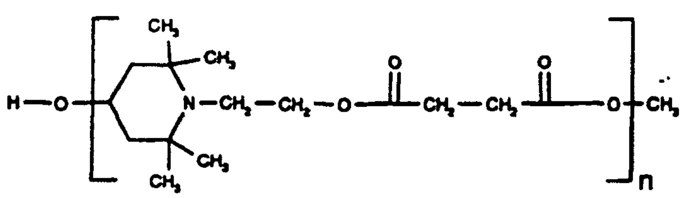

(CAS-No. 65447-77-0);

Verbindung Nr. 84: Oligomer mit wiederkehrenden Einheiten der Formel

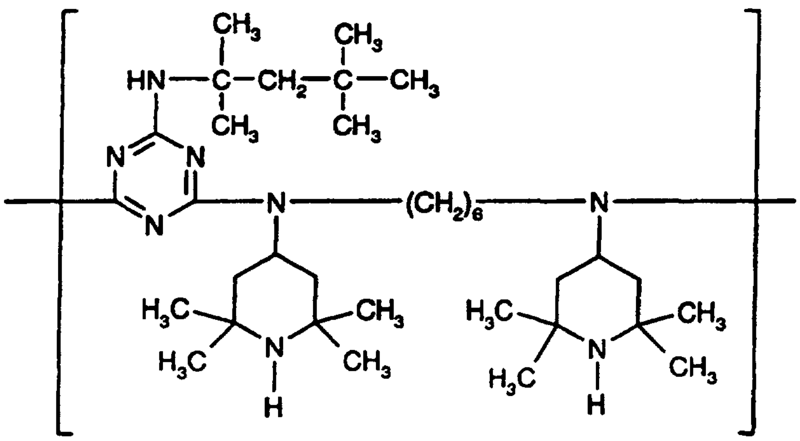

(CAS-No. 70624-18-9).

Beispiel 1:Langzeitwärmestabilität von Polypropylenbändchen 100 Gewichtsteile Polypropylenpulver vom Schmelzindex 2,4 g/10 min (230°C, 2160 g) werden in einem Trommelmischer mit 0,05 Gewichtsteilen Pentaerythrityl-tetrakis-3-(3,5-ditert.-butyl-4-hydroxyphenyl)-propionat, 0,05 Gewichtsteilen Tris-(2,4-ditert.-butylphenyl)-phosphit, 0,1 Gewichtsteilen Calciumstearat und dem in nachfolgender Tabelle 1 angegebenen Lichtschutzmittel gemischt und anschließend in einem Extruder bei einer Temperatur von 180 bis 220°C granuliert. Eine Kontrollprobe enthält kein weiteres Lichtschutzmittel.

Das erhaltene Granulat wird in einem zweiten Extruder mit Breitschlitzdüse (220-260°C) zu einer Folie verarbeitet. Diese wird in Bändchen geschnitten, die anschließend bei erhöhter Temperatur im Verhältnis 1:6 gestreckt und aufgewickelt werden (Titer der Bändchen: 700 bis 900 den; Reißfestigkeit: 5,5 bis 6,5 den).

Aus den so hergestellten Polypropylenbändchen werden Proben von jeweils 17 cm Länge geschnitten und ohne Spannung in einem Umluftofen aufgehängt, der anschließend auf 120°C aufgeheizt wird. Als Maß für die thermooxidative Beständigkeit der Bändchen gilt die Lebensdauer der Proben, d.h. die Zeitspanne bis die Proben aufgrund ihres Eigengewichtes herunterfallen (Zeit bis zur Zersetzung, Ofenalterungswert). Der Mittelwert aus 5 Prüflingen wird zur Beurteilung herangezogen. Der mittlere Ozongehalt der Luft während der Prüfdauer wird aus Daten ermittelt, welche vom Lufthygieneamt beider Basel in Liestal, Schweiz, zur Verfügung gestellt werden.

Die Ergebnisse sind in der nachfolgenden Tabelle 1 zusammengestellt.

Tab. 1:

| Tage bis zur Zersetzung von PP-Bändchen bei 120°C (in Klammern: mittlerer Luftozongehalt während der Prüfdauer in µg/m$^3$) | | | | |
|---|---|---|---|---|
| Stabilisierung: | nur GS* | GS* + 0,1 % | GS* + 0,2 % | GS* + 0,05 % |
| Prüfbeginn | | Stabilisator A | Stabilisator A | Verb. Nr. 84 |
| 15.10.93 | 59d (14,80) | 91d (21,05) | 158d (22,17) | 206d (25,74) |
| 25.11.93 | 49d (28,11) | 78d (24,59) | 142d (27,49) | 204d (30,82) |
| 10.01.94 | 43d (18,62) | 74d (23,80) | 118d (29,06) | 195d (38,02) |
| 24.02.94 | 32d (34,02) | 55d (34,40) | 100d (36,37) | 183d (46,66) |
| 15.04.94 | 25d (35,85) | 37d (34,52) | 74d (40,54) | 181d (41,74) |
| 30.05.94 | 25d (46.36) | 37d (52,59) | 71d (60,43) | 202d (31,84) |
| 15.07.94 | 20d (73,16) | 31d (63,52) | 74d (48,27) | 198d (67,76) |
| 01.09.94 | 39d (19,82) | 73d (14,51) | 138d (13,61) | 199d (18,63) |
| 17.10.94 | 47d (7,42) | 83d (11,21) | 147d (17,67) | 188d (20,31) |
| 30.11.94 | 46d (15,60) | 67d (18,39) | 126d (25,10) | 191d (25,10) |

* GS = Grundstabilisierung 0,05 Gew.-% Pentaerythrityl-tetrakis(3-[3',5'-di-tert.butyl-4'-hydroxyphenyl]-propionat) und 0,05 Gew.-% Tris(2,4-di-tert. butyl-phenyl)-phosphit.

Die Abbildungen 1 bis 4 sind jeweils grafische Darstellungen der Daten aus Spalten 2-5 obiger Tabelle 1. Aufgetragen ist jeweils der reziproke Ofenalterunyswert gegenüber der mittleren Ozonkonzentration. Es zeigt sich ein linearer Zusammenhang der Form

$$1/OF = A + B \cdot [Ozon],$$

worin OF der Ofenalterungswert in Tagen, [Ozon] der mittlere Ozongehalt der Luft in µg/m$^3$ während der Prüfdauer und A und B freie Parameter sind.

Abb. 1 zeigt, daß 1/OF bei steigender Ozonkonzentration ansteigt; die Proben ohne zusätzlichen Stabilisator zersetzen sich schneller bei höherem Ozongehalt der Umgebungsluft.

Die Abbildungen 2 und 3 zeigen denselben Zusammenhang bei Proben, denen als zusätzlicher Stabilisator ein tertiäres gehindertes Amin zugegeben wurde (Stabilisator A).

Abb. 4 zeigt, daß nach Zusatz eines erfindungsgemäßen Stabilisators (Verbindung Nr. 84) 1/OF konstant bleibt; der Ozongehalt der Umgebungsluft bleibt ohne Einfluß auf die Lebensdauer der Proben.

Die Lebensdauer der erfindungsgemäß stabilisierten Proben ist unabhängig vom Ozongehalt der Umgebungsluft und läßt sich daher mit höherer Genauigkeit vorhersagen. Unnötig hohe Dosierung des Stabilisators läßt sich so vermeiden.

## Patentansprüche

1. Verwendung einer monomeren sterisch gehinderten Piperidinverbindung, einer oligomeren oder polymeren sterisch gehinderten Piperidinverbindung, welche eine oder mehrere Triazineinheiten enthält, oder einer sekundären sterisch gehinderten Piperidinverbindung, jeweils enthaltend einen Rest der Formel I

(I)

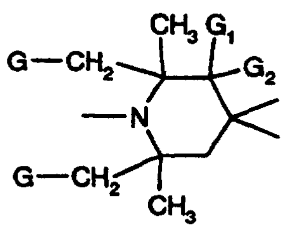

worin
G Wasserstoff oder Methyl ist, und
$G_1$ und $G_2$ Wasserstoff, Methyl oder gemeinsam Sauerstoff bedeuten,
zur Stabilisierung organischer Polymere gegen den schädigenden Einfluß von Ozon.

2. Verwendung gemäß Anspruch 1, worin die sterisch gehinderte Piperidinverbindung mindestens eine 2,2,6,6-Tetramethylpiperidineinheit der Formel I'

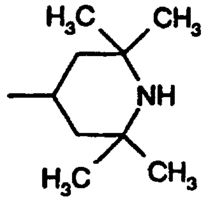

(I')

enthält.

3. Verwendung gemäß Anspruch 1, wobei das organische Polymer ein Polyolefin oder Polyolefin-Copolymer oder ein Elastomer ist.

**4.** Verwendung gemäß Anspruch 1 zur Stabilisierung gegen Ozon in einer über die Gebrauchsdauer des organischen Polymeren gemittelten Konzentration von 10 µg/m$^3$ oder mehr.

**5.** Verwendung gemäß Anspruch 1, wobei die als Stabilisator wirksame Verbindung mindestens neben dem Rest der Formel I mindestens eine Triazineinheit enthält.

**6.** Verwendung gemäß Anspruch 5, wobei die als Stabilisator wirksame Verbindung ausgewählt ist aus

i) Verbindungen der Formel Ig

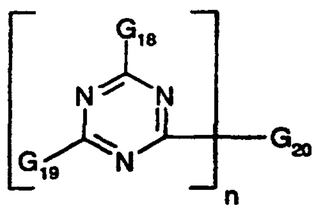

(Ig),

worin n die Zahl 1 oder 2 ist und $G^{18}$ eine Gruppe der Formel II

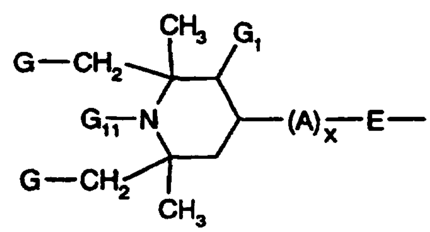

(II)

bedeutet, worin G und $G_1$ die in Anspruch 1 angegebene Bedeutung haben,
$G_{11}$ Wasserstoff, $O^{\cdot}$, Hydroxy, NO, $-CH_2CN$, $C_1$-$C_{18}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, Benzyloxy, Glycidyl oder eine Gruppe $-CH_2CH(OH)$-Z bedeutet, wobei $G_{11}$ vorzugsweise Wasserstoff, $C_1$-$C_4$-Alkyl, Allyl, Benzyl, Acetyl oder Acryloyl ist,
Z Wasserstoff, Methyl oder Phenyl darstellt,
E -O- oder $-NG_{13}$- ist,
A $C_2$-$C_6$-Alkylen oder $-(CH_2)_3$-O- darstellt,
x die Zahl O oder 1 bedeutet,
$G_{13}$ Wasserstoff, $C_1$-$C_{12}$-Alkyl, $C_2$-$C_5$-Hydroxyalkyl oder $C_5$-$C_7$-Cycloalkyl darstellt,
$G_{19}$ gleich $G_{18}$ oder eine der Gruppen $-NG_{21}G_{22}$, $-OG_{23}$, $-NHCH_2OG_{23}$ oder $-N(CH_2OG_{23})_2$ ist,
$G_{20}$, wenn n = 1 ist, gleich $G_{18}$ oder $G_{19}$, und wenn n = 2 ist, $G_{20}$ eine Gruppe -E-B-E- ist,
worin B $C_2$-$C_8$-Alkylen oder durch 1 oder 2 Gruppen $-N(G_{21})$- unterbrochenes $C_2$-$C_8$-Alkylen bedeutet,
$G_{21}$ $C_1$-$C_{12}$-Alkyl, Cyclohexyl, Benzyl oder $C_1$-$C_4$-Hydroxyalkyl oder eine Gruppe der Formel I"

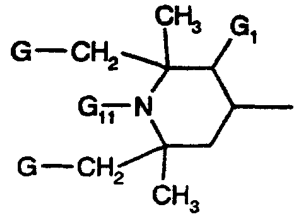

(I")

oder eine Gruppe der Formel

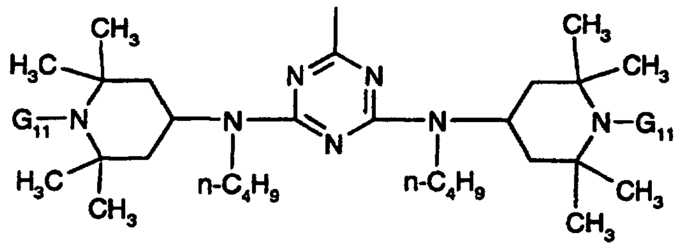

bedeutet,
$G_{22}$ $C_1$-$C_{12}$-Alkyl, Cyclohexyl, Benzyl oder $C_1$-$C_4$-Hydroxyalkyl darstellt, oder $G_{21}$ und $G_{22}$ zusammen $C_4$-$C_5$-Alkylen oder $C_4$-$C_5$-Oxaalkylen wie beispielsweise $-CH_2CH_2OCH_2CH_2-$ oder eine Gruppe der Formel $-CH_2CH_2N(G_{11})CH_2CH_2-$ darstellen, und
$G_{23}$ Wasserstoff, $C_1$-$C_{12}$-Alkyl oder Phenyl bedeutet;
ii) oligomeren oder polymeren Verbindungen, deren wiederkehrende Struktureinheit Reste vom der Formel I und Triazin enthält.

**7.** Verwendung einer sterisch gehinderten Piperidinverbindung gemäß Anspruch 1 oder 6, wobei G, $G_1$ und $G_2$ in Formeln I und I" Wasserstoff ist.

**8.** Verwendung gemäß Anspruch 1, wobei die als Stabilisator wirksame Verbindung in einer Menge von 0,02 bis 5 % bezogen auf das Gewicht des zu stabilisierenden Polymers eingesetzt wird.

**9.** Stabilisiertes organisches Polymer in Kontakt mit Ozon, wobei die über die Gebrauchsdauer gemittelte Ozonkonzentration grösser als 10 µg/m$^3$ ist, **dadurch gekennzeichnet, daß** das Polymer als Stabilisator eine monomere sterisch gehinderte Piperidinverbindung oder eine oligomere oder polymere sterisch gehinderte Piperidinverbindung, welche eine oder mehrere Triazineinheiten enthält, oder eine sekundäre sterisch gehinderte Piperidinverbindung enthaltend einen Rest der Formel I gemäß Anspruch 1 enthält.

**10.** Verfahren zur Stabilisierung eines organischen Polymeren gegen Ozon in der Umgebungsluft, **dadurch gekennzeichnet, daß** man dem Polymeren als Stabilisator eine monomere sterisch gehinderte Piperidinverbindung oder eine oligomere oder polymere sterisch gehinderte Piperidinverbindung, welche eine oder mehrere Triazineinheiten enthält, oder eine sekundäre sterisch gehinderte Piperidinverbindung beigibt, wobei der Stabilisator mindestens einen Rest der Formel I

(I) 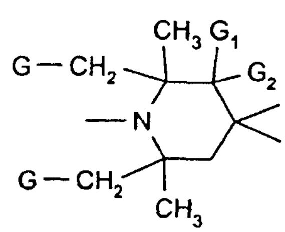

enthält, worin

G Wasserstoff oder Methyl ist, und
$G_1$ und $G_2$ Wasserstoff, Methyl oder gemeinsam Sauerstoff bedeuten.

## Claims

**1.** Use of a monomeric sterically hindered piperidine compound or of an oligomeric or polymeric sterically hindered

piperidine compound containing one or more triazine units or of a secondary sterically hindered piperidine compound, in each case containing a radical of formula I

(I) 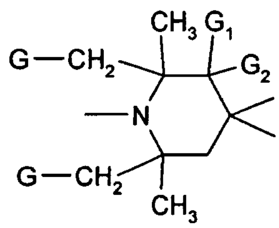

wherein
G is hydrogen or methyl, and
$G_1$ and $G_2$ are hydrogen, methyl or, taken together, oxygen,
for stabilising organic polymers against the harmful action of ozone.

**2.** Use according to claim 1, wherein the sterically hindered piperidine compound contains at least one 2,2,6,6-tetramethylpiperidine unit of formula I'

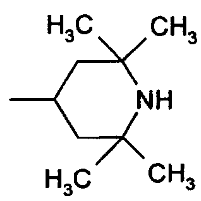 (I').

**3.** Use according to claim 1, wherein the organic polymer is a polyolefin or polyolefin copolymer or an elastomer.

**4.** Use according to claim 1 for stabilising against ozone in a concentration averaged over the service life of the organic polymer of 10 $\mu g/m^3$ or more.

**5.** Use according to claim 1, wherein the compound which is effective as stabiliser contains, at least in addition to the radical of formula I, at least one triazine unit.

**6.** Use according to claim 5, wherein the compound which is effective as stabiliser is selected from

i) compounds of formula Ig

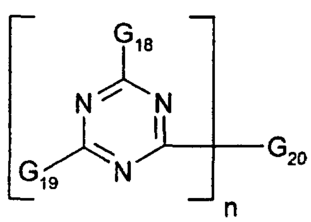 (Ig),

wherein n is the number 1 or 2 and $G_{18}$ is a group of formula II

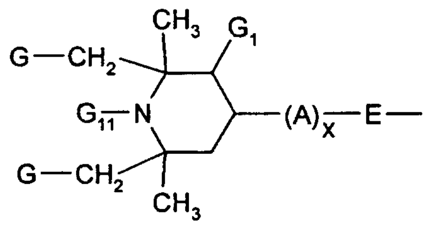 (II),

wherein G and $G_1$ are as defined in claim 1,
$G_{11}$ is hydrogen, $O^\cdot$, hydroxy, NO, $-CH_2CN$, $C_1$-$C_{18}$alkyl, $C_3$-$C_8$alkenyl, $C_3$-$C_8$alkynyl, $C_7$-$C_{12}$aralkyl, $C_1$-$C_{18}$alkoxy, $C_5$-$C_8$cycloalkoxy, $C_7$-$C_9$phenylalkoxy, $C_1$-$C_8$alkanoyl, $C_3$-$C_5$alkenoyl, benzyloxy, glycidyl or a group $-CH_2CH(OH)-Z$, $G_{11}$ preferably being hydrogen, $C_1$-$C_4$alkyl, allyl, benzyl, acetyl or acryloyl,
Z is hydrogen, methyl or phenyl,
E is -O- or $-NG_{13}-$,
A is $C_2$-$C_6$alkylene or $-(CH_2)_3-O-$,
x is the number 0 or 1,
$G_{13}$ is hydrogen, $C_1$-$C_{12}$alkyl, $C_2$-$C_5$hydroxyalkyl or $C_5$-$C_7$cycloalkyl,
$G_{19}$ is $G_{18}$ or one of the groups $-NG_{21}G_{22}$, $-OG_{23}$, $-NHCH_2OG_{23}$ or $-N(CH_2OG_{23})_2$,
$G_{20}$, when n = 1, is $G_{18}$ or $G_{19}$, and, when n = 2, $G_{20}$ is a group -E-B-E-, wherein B is $C_2$-$C_8$alkylene or $C_2$-$C_8$alkylene which is interrupted by 1 or 2 groups $-N(G_{21})-$,
$G_{21}$ is $C_1$-$C_{12}$alkyl, cyclohexyl, benzyl or $C_1$-$C_4$hydroxyalkyl or a group of formula I''

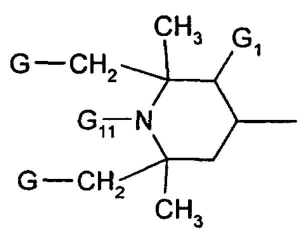 (I''),

or a group of formula

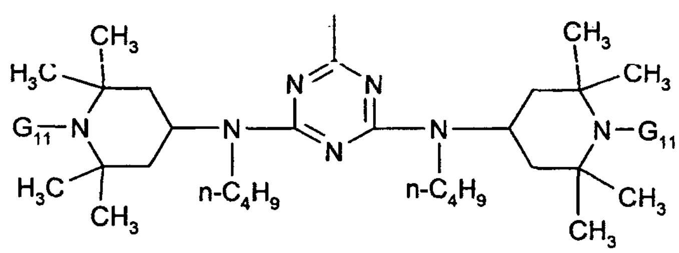 ,

$G_{22}$ is $C_1$-$C_{12}$alkyl, cyclohexyl, benzyl or $C_1$-$C_4$hydroxyalkyl, or $G_{21}$ and $G_{22}$, taken together, are $C_4$-$C_5$alkylene or $C_4$-$C_5$oxaalkylene, such as $-CH_2CH_2OCH_2CH_2-$, or a group of formula $-CH_2CH_2N(G_{11})CH_2CH_2-$, and
$G_{23}$ is hydrogen, $C_1$-$C_{12}$alkyl or phenyl;
ii) oligomeric or polymeric compounds, the structural repeating units of which contain radicals of formula I and triazine.

7. Use of a sterically hindered piperidine compound according to claim 1 or 6, wherein G, $G_1$ and $G_2$ in formulae I and I'' are hydrogen.

8. Use according to claim 1, wherein the compound which is effective as stabiliser is used in an amount of from 0.02 to 5 %, based on the weight of the polymer to be stabilised.

9. A stabilised organic polymer in contact with ozone, the ozone concentration averaged over the service life being

greater than 10 µg/$m^3$, which polymer comprises as stabiliser a monomeric sterically hindered piperidine compound or an oligomeric or polymeric sterically hindered piperidine compound containing one or more triazine units or a secondary sterically hindered piperidine compound containing a radical of formula I as claimed in claim 1.

**10.** A process for stabilising an organic polymer against ozone in the ambient air, which comprises adding to the polymer as stabiliser a monomeric sterically hindered piperidine compound or an oligomeric or polymeric sterically hindered piperidine compound containing one or more triazine units or a secondary sterically hindered piperidine compound, the stabiliser containing at least one radical of formula I

(I) 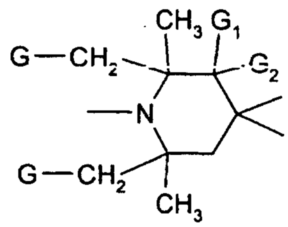

wherein
G is hydrogen or methyl, and
$G_1$ and $G_2$ are hydrogen, methyl or, taken together, oxygen.

## Revendications

**1.** Utilisation d'un composé monomère de pipéridine à encombrement stérique, d'un composé oligomère ou polymère de pipéridine à encombrement stérique, qui contient un ou plusieurs motifs triazine, ou d'un composé secondaire de pipéridine à encombrement stérique, contenant chacun un groupe de formule I

(I) 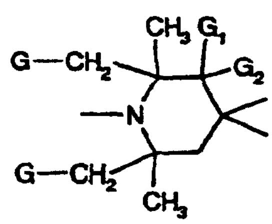

dans laquelle
G représente un atome d'hydrogène ou un groupe méthyle, et
$G_1$ et $G_2$ représentent un atome d'hydrogène, un groupe méthyle ou, ensemble, un atome d'oxygène,
pour la stabilisation de polymères organiques envers les effets nuisibles de l'ozone.

**2.** Utilisation selon la revendication 1, dans laquelle le composé de pipéridine à encombrement stérique contient au moins un motif 2,2,6,6-tétraméthylpipéridine de formule I'

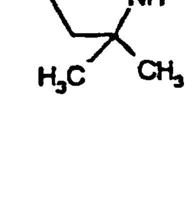 (I')

3. Utilisation selon la revendication 1, dans laquelle le polymère organique est une polyoléfine ou un copolymère de polyoléfine ou un élastomère.

4. Utilisation selon la revendication 1 pour la stabilisation à l'ozone à une concentration, estimée sur la durée de vie du polymère organique, de 10 μg/m$^3$ ou plus.

5. Utilisation selon la revendication 1, dans laquelle le composant efficace en tant que stabilisant contient au moins un motif triazine en plus du groupe de formule I.

6. Utilisation selon la revendication 5, dans laquelle le composant efficace en tant que stabilisant est choisi parmi

i) des composés de formule Ig

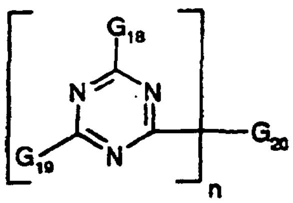

(Ig),

dans laquelle n vaut 1 ou 2 et $G_{18}$ représente un groupe de formule II

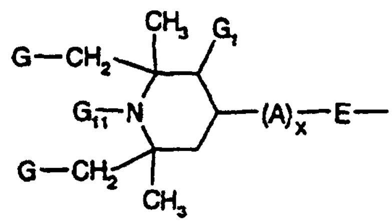

(II)

dans laquelle G et $G_1$ ont la signification donnée dans la revendication 1,
$G_{11}$ représente un atome d'hydrogène, $O^-$ un groupe hydroxy, NO, $-CH_2CN$, alkyle en $C_1$ à $C_{18}$, alcényle en $C_3$ à $C_8$, alcynyle en $C_3$ à $C_8$, aralkyle en $C_7$ à $C_{12}$, alcoxy en $C_1$ à $C_{18}$, cycloalcoxy en $C_5$ à $C_8$, phénylalcoxy en $C_7$ à $C_9$, alcanoyle en $C_1$ à $C_8$, alcénoyle en $C_3$ à $C_5$, benzyloxy, glycidyle ou un groupe $-CH_2CH(OH)-Z$, $G_{11}$ représentant de préférence un atome d'hydrogène, un groupe alkyle en $C_1$ à $C_4$, allyle, benzyle, acétylène ou acryloyle,
Z représente un atome d'hydrogène, un groupe méthyle ou phényle,
E représente -O- ou $-NG_{13}-$,
A représente un groupe alkylène en $C_2$ à $C_6$ ou $-(CH_2)_3-O-$,
x vaut 0 ou 1,
$G_{13}$ représente un atome d'hydrogène, un groupe alkyle en $C_1$ à $C_{12}$, hydroxyalkyle en $C_2$ à $C_5$ ou cycloalkyle en $C_5$ à $C_7$,
$G_{19}$ est identique à $G_{18}$ ou représente un des groupes $-NG_{21}G_{22}$, $-OG_{23}$, $-NHCH_2OG_{23}$ ou $-N(CH_2OG_{23})_2$,
$G_{20}$, si n = 1, est identique à $G_{16}$ ou $G_{19}$, et si n = 2,
$G_{20}$ représente un groupe -E-B-E-, où B représente un groupe alkylène en $C_2$ à $C_8$ ou un groupe alkylène en $C_2$ à $C_8$ interrompu par un ou deux groupes $-N(G_{21})-$,
$G_{21}$ représente un groupe alkyle en $C_1$ à $C_{12}$, cyclohexyle, benzyle ou hydroxyalkyle en $C_1$ à $C_4$ ou un groupe de formule I"

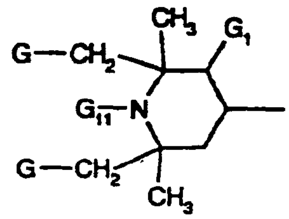

(I")

ou un groupe de formule

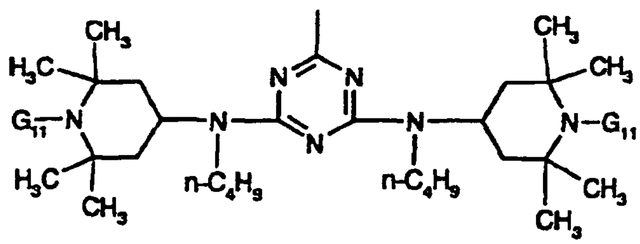

$G_{22}$ représente un groupe alkyle en $C_1$ à $C_{12}$, cyclohexyle, benzyle ou hydroxyalkyle en $C_1$ à $C_4$, ou bien $G_{21}$ et $G_{22}$ représentent ensemble un groupe alkylène en $C_4$ à $C_5$ ou oxaalkylène en $C_4$ à $C_5$ tel que, par exemple, un groupe $-CH_2CH_2OCH_2CH_2-$ ou un groupe de formule $-CH_2CH_2N(G_{11})CH_2CH_2-$, et
$G_{23}$ représente un atome d'hydrogène, un groupe alkyle en $C_1$ à $C_{12}$ ou phényle.

ii) des composés oligomères ou polymères, dont le motif récurrent contient des groupes de formule I et une triazine.

**7.** Utilisation d'un composé de pipéridine à encombrement stérique selon la revendication 1 ou 6, où G, $G_1$ et $G_2$ dans les formules I et I" représentent un atome d'hydrogène.

**8.** Utilisation selon la revendication 1, dans laquelle le composé efficace en tant que stabilisant est mis en oeuvre à raison de 0,02% à 5% par rapport au poids du polymère à stabiliser.

**9.** Polymère organique stabilisé en contact avec l'ozone, dans lequel la concentration d'ozone estimée sur la durée de vie est supérieure à 10 $\mu g/m^3$, **caractérisé en ce que** le polymère contient, en tant que stabilisant, un composé monomère de pipéridine à encombrement stérique ou un composé oligomère ou polymère de pipéridine à encombrement stérique, qui contient un ou plusieurs motifs triazine, ou un composé secondaire de pipéridine à encombrement stérique contenant un groupe de formule I selon la revendication 1.

**10.** Procédé de stabilisation d'un polymère organique à l'ozone atmosphérique, **caractérisé en ce que** l'on ajoute au polymère, en tant que stabilisant, un composé monomère de pipéridine à encombrement stérique ou un composé oligomère ou polymère de pipéridine à encombrement stérique, lequel contient un ou plusieurs motifs triazine, ou un composé secondaire de pipéridine à encombrement stérique, dans lequel le stabilisant contient au moins un groupe de formule I

(I)

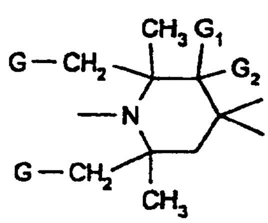

dans laquelle
G représente un atome d'hydrogène ou un groupe méthyle, et
$G_1$ et $G_2$ représentent un atome d'hydrogène, un groupe méthyle ou, ensemble, un atome d'oxygène.

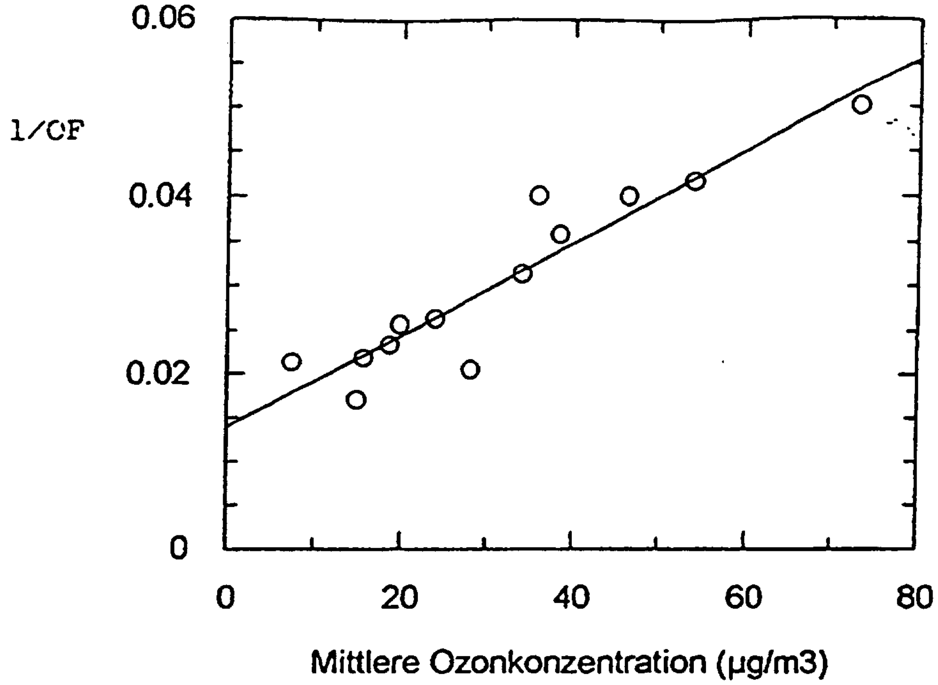
0.06
1/CF
0.04
0.02
0
0
20
40
60
80
Mittlere Ozonkonzentration (µg/m3)

Abb. 1

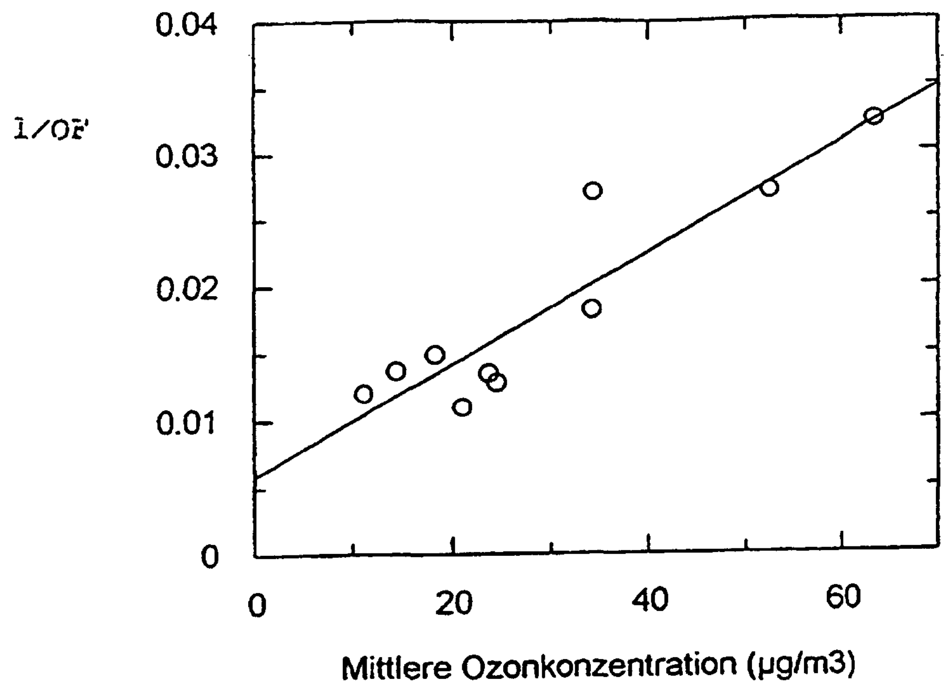
1/OF
0.04
0.03
0.02
0.01
0
0
20
40
60
Mittlere Ozonkonzentration (µg/m3)

Abb. 2

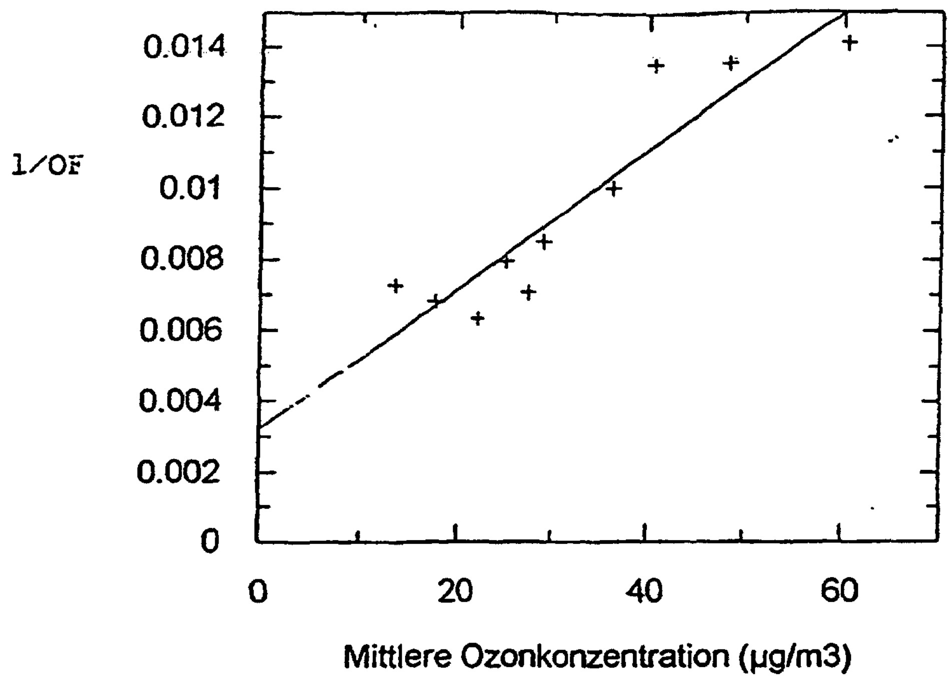
1/OF
0.014
0.012
0.01
0.008
0.006
0.004
0.002
0
0
20
40
60
Mittlere Ozonkonzentration (µg/m3)

Abb. 3

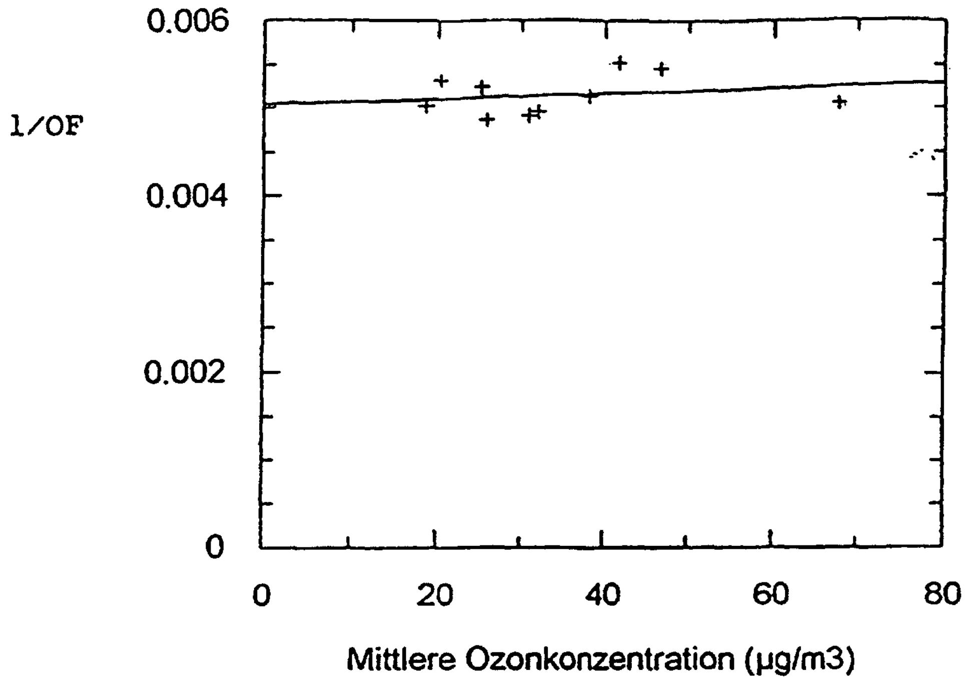
0.006
1/OF
0.004
0.002
0
0
20
40
60
80
Mittlere Ozonkonzentration (µg/m3)

Abb. 4